# EUROPEAN PATENT APPLICATION

(11) **EP 4 471 956 A1**
(43) Date of publication of application: **04.12.2024**
(21) Application number: 22961808.7
(22) Date of filing: 14.10.2022
(51) Int. Cl.: H01M 50/244

(54) **BATTERY AND ELECTRIC DEVICE**

(71) Applicant: Contemporary Amperex Technology (Hong Kong) Limited, Central, Central And Western District (HK)
(72) Inventor: LIU, Ruidi, Ningde, Fujian 352100 (CN); WANG, Zengzhong, Ningde, Fujian 352100 (CN); WU, Youxin, Ningde, Fujian 352100 (CN); WANG, Peng, Ningde, Fujian 352100 (CN)
(74) Representative: Ran, Handong
(86) International application number: PCT/CN2022/125501
(87) International publication number: WO 2024/077622

(57) **Abstract**

The present application belongs to the technical field of batteries. Specifically disclosed are a battery and an electric device. The battery comprises a box body and a battery assembly, wherein the battery assembly is accommodated in the box body; the battery assembly comprises at least one battery cell; and the battery assembly is arranged in a first direction, which is the direction along the length of the battery or the direction of travel of an electric device having the battery. The battery cell has a first surface and a second surface, wherein the first surface is provided with an electrode terminal; the second surface is connected to the box body; the second surface intersects with a third direction; and the third direction intersects with both the first direction and a horizontal plane. In the battery of the present application, a battery cell has a first surface and a second surface, the second surface being configured to intersect with the third direction. The electrode terminal is arranged on the first surface, and the second surface is connected to the box body, such that there is no electrode terminal on the surface where the battery cell is connected to the box body, thereby making it convenient for the electrode terminal to be fully exposed to the outside after the box body is opened, and thus improving the convenience of battery maintenance and inspection.

## Description

### TECHNICAL FIELD

This application relates to the field of battery technologies, and in particular, to a battery and an electric device.

### BACKGROUND

With the development of new energy sources, more and more fields are adopting new energy as power. Traction batteries are widely used in new energy vehicles, consumer electronics, energy storage systems, and other fields thanks to their advantages such as high energy density, support of cyclic charging, safety, and environment friendliness.

A traction battery typically includes a box and battery cells. The battery cells are provided within the box and fixed to the box by adhesive bonding. For battery cells with electrode terminals extending from the top and bottom, the adhesive bonding method is not convenient for maintenance and inspection of the battery.

### SUMMARY

In view of the above problem, this application provides a battery and an electric device to solve the existing problem of inconvenient maintenance and inspection of the battery.

A first aspect of this application proposes a battery, where the battery includes:
a box; and
a battery assembly accommodated within the box, where the battery assembly includes at least one battery cell, the battery assembly is arranged along a first direction, the first direction is a lengthwise direction of the battery or a traveling direction of an electric device provided with the battery, the battery cell has a first surface and a second surface, the first surface is provided with an electrode terminal, the second surface is connected to the box, the second surface intersects with a third direction, and the third direction intersects with both the first direction and the horizontal plane.

According to the battery of this application, the battery cell has the first surface and the second surface, the second surface intersecting with the third direction (the third direction intersects with both the first direction and the horizontal direction). The first surface is provided with an electrode terminal, and the second surface is connected to the box, ensuring that the connection surface of the battery cell to the box does not have electrode terminals. This allows the electrode terminal to be fully exposed after the box is opened, facilitating maintenance and inspection of the battery without separating the battery cell from the box after the box is opened, thus improving the convenience for maintenance and inspection of the battery.

In some embodiments of this application, the lengthwise direction of the battery is parallel to or intersects with the traveling direction of the electric device. Setting the lengthwise direction of the battery to be parallel to or intersect with the traveling direction of the electric device improves the convenience of arranging the battery within the electric device.

In some embodiments of this application, along the third direction, the first surface and the second surface are arranged oppositely, and the battery cell further has a third surface, where the third surface is a largest-area surface of the battery cell, the third surface is arranged along the third direction and intersects with the horizontal plane, and the third surface is connected to both the first surface and the second surface. In the embodiments, the first surface and the second surface are arranged oppositely along the third direction, and when the box is opened during maintenance or inspection of the battery, the second surface of the battery cell is connected to the box of the battery, to expose the electrode terminal on the first surface to the outside. This facilitates maintenance and inspection of the battery without separating the battery cell from the box after the box is opened, further improving the convenience for maintenance and inspection of the battery. Additionally, since the third surface is the largest-area surface, and the second surface has a smaller area than the third surface, more battery cells can be connected per unit area of the box, thereby improving the energy density of the battery.

In some embodiments of this application, the third surface is provided in a quantity of two, the two third surfaces being arranged oppositely along the first direction; and the battery cell includes two oppositely polarized electrode terminals, the two oppositely polarized electrode terminals being both arranged on the first surface. In the embodiments, the battery cell is provided with two third surfaces, both of the two third surfaces are largest-area surfaces, the first surface and the second surface are arranged oppositely along the third direction, and the two third surfaces are arranged oppositely along the first direction. This further improves the convenience of arranging the battery cell within the battery to meet installation requirements of different batteries.

In some embodiments of this application, the third surface is provided in a quantity of two, where the two third surfaces are arranged oppositely along a second direction, and the second direction, the first direction, and the third direction intersect with each other; and the battery cell includes two oppositely polarized electrode terminals, where the two oppositely polarized electrode terminals are both arranged on the first surface. In the embodiments, the battery cell is provided with two third surfaces, both of the two third surfaces are largest-area surfaces, the first surface and the second surface are arranged oppositely along the third direction, and the two third surfaces are arranged oppositely along the second direction. This further improves the convenience of arranging the battery cell within the battery to meet installation requirements of different batteries.

In some embodiments of this application, the third surface is provided in a quantity of one, and the battery cell includes two oppositely polarized electrode terminals, where one of the two oppositely polarized electrode terminals is arranged on the first surface, and the housing of the battery cell forms the other of the two oppositely polarized electrode terminals. In the embodiments, the battery cell is provided with one third surface, this third surface is a largest-area surface, and the first surface and the second surface are arranged oppositely along the third direction. This further improves the convenience of arranging the battery cell within the battery to meet installation requirements of different batteries.

In some embodiments of this application, the battery cell further has a third surface, where the third surface is a largest-area surface of the battery cell, the third surface is arranged along the third direction and intersects with the horizontal plane, and the first surface, the second surface, and the third surface intersect with each other. In the embodiments, the first surface, the second surface, and the third surface intersect with each other, the second surface is connected to the box, and the electrode terminal is arranged on the first surface. This facilitates maintenance and inspection of the battery without separating the battery cell from the box after the box is opened.

In some embodiments of this application, the first surface is provided in a quantity of two, the two first surfaces being arranged oppositely along the first direction; and the battery cell includes two oppositely polarized electrode terminals; where
the two oppositely polarized electrode terminals are both arranged on one of the first surfaces, or the two oppositely polarized electrode terminals are respectively arranged on the two first surfaces.

In the embodiments, two first surfaces are set, and the two first surfaces are arranged oppositely along the first direction. The two oppositely polarized electrode terminals can be arranged on one of the first surfaces or respectively on the two first surfaces. This improves the convenience of arranging the electrode terminals while ensuring good convenience for maintenance and inspection of the battery, meeting the diverse needs of the battery.

In some embodiments of this application, the first surface is provided in a quantity of two, where the two first surfaces are arranged oppositely along a second direction, and the first direction, the second direction, and the third direction intersect with each other; and the battery cell includes two oppositely polarized electrode terminals; where
the two oppositely polarized electrode terminals are both arranged on one of the first surfaces, or the two oppositely polarized electrode terminals are respectively arranged on the two first surfaces.

In the embodiments, the two first surfaces are provided, where the two first surfaces are arranged oppositely along the second direction. The two oppositely polarized electrode terminals can be arranged on one of the first surfaces or respectively on the two first surfaces. This further improves the convenience of arranging the electrode terminals while ensuring good convenience for maintenance and inspection of the battery, further meeting the diverse needs of the battery.

In some embodiments of this application, the second surface is a largest-area surface of the battery cell, where the first surface has a smaller area than the second surface, and the first surface is arranged along the first direction and intersects with the second surface; and the battery cell includes two first surfaces, where the two first surfaces are arranged oppositely along a second direction, and the first direction, the second direction, and the third direction intersect with each other; and
the battery cell includes two oppositely polarized electrode terminals, where the two oppositely polarized electrode terminals are both arranged on a same one of the first surfaces, or the two oppositely polarized electrode terminals are respectively arranged on the two first surfaces.

In the embodiments, the second surface is a largest-area surface, and the two first surfaces intersect with the second surface, and the two oppositely polarized electrode terminals can be arranged on one of the first surfaces or respectively on the two first surfaces. This further improves the convenience of arranging the electrode terminals while ensuring good convenience for maintenance and inspection of the battery, further meeting the diverse needs of the battery.

In some embodiments of this application, the second surface is a largest-area surface of the battery cell, where the first surface has a smaller area than the second surface, the first surface is arranged along a second direction and intersects with the second surface, and the second direction, the first direction, and the third direction intersect with each other; and the battery cell includes two first surfaces, where the two first surfaces are arranged oppositely along the first direction; and
the battery cell includes two oppositely polarized electrode terminals, where the two oppositely polarized electrode terminals are both arranged on a same one of the first surfaces, or the two oppositely polarized electrode terminals are respectively arranged on the two first surfaces.

In the embodiments, the second surface is a largest-area surface, the two first surfaces intersect with the second surface, and the two oppositely polarized electrode terminals can be arranged on one of the first surfaces or respectively on the two first surfaces. This further improves the convenience of arranging the electrode terminals while ensuring good convenience for maintenance and inspection of the battery, further meeting the diverse needs of the battery.

In some embodiments of this application, the first surface is a largest-area surface of the battery cell. In the embodiments, the first surface is the largest-area surface, and the electrode terminal is arranged on the first surface. This can provide sufficient operational space for maintenance and inspection of the battery during maintenance and inspection of the battery, further improving the convenience for maintenance and inspection of the battery.

In some embodiments of this application, the battery cell includes the first surface and a fourth surface provided opposite to the first surface, where the first surface and the fourth surface are arranged oppositely along the first direction, the fourth surface is provided with a recess on edge, the first surface is used for arranging the electrode terminal, and the electrode terminal protrudes in a second direction from the first surface and corresponds to the recess.

In the embodiments, the first surface is a largest-area surface, the fourth surface is provided, and the fourth surface is opposite to the first surface in the first direction. This meets the diverse needs of the battery while providing sufficient operational space for maintenance and inspection during maintenance and inspection of the battery.

In some embodiments of this application, the battery cell includes the first surface and a fourth surface opposite to the first surface, where the first surface and the fourth surface are arranged oppositely along a second direction, the second direction, the first direction, and the third direction intersect with each other, the fourth surface is provided with a recess on edge, the first surface is used for arranging the electrode terminal, and the electrode terminal protrudes in the second direction from the first surface and corresponds to the recess.

In the embodiments, the first surface is a largest-area surface, the fourth surface is provided, and the fourth surface is opposite to the first surface in the second direction. This further meets the diverse needs of the battery during maintenance and inspection of the battery on a basis of providing sufficient operational space for maintenance and inspection.

In some embodiments of this application, the battery further includes a thermally conductive member, where the thermally conductive member is arranged along the first direction, and the thermally conductive member is at least thermally connected to a largest-area surface of the battery cell. In the embodiments, the thermally conductive member is thermally connected to the largest-area surface of the battery cell, thereby increasing the heat exchange efficiency between the battery cell and the thermally conductive member and reducing the safety hazards caused by poor heat dissipation of the battery.

In some embodiments of this application, the battery includes at least two battery assemblies; where along the second direction, two sides of the thermally conductive member are thermally connected to the two battery assemblies respectively, and the second direction, the first direction, and the third direction intersect with each other. In the embodiments, the battery assemblies located within the box are all thermally connected to the thermally conductive member, further ensuring adequate heat dissipation of the battery assemblies and reducing the safety hazards caused by poor heat dissipation.

In some embodiments of this application, the battery includes multiple thermally conductive members, where the multiple thermally conductive members are arranged along the second direction, and the second direction, the first direction, and the third direction intersect with each other. In the embodiments, multiple thermally conductive members are provided, further increasing the heat exchange capacity for the battery cells, allowing the battery to maintain a relatively safe temperature range, and further reducing the safety hazards caused by poor heat dissipation.

In some embodiments of this application, along the second direction, the thermally conductive members are arranged on two sides of the battery assembly respectively, where the battery assembly is thermally connected to the thermally conductive members on the two sides. In the embodiments, the two sides of the battery assembly are thermally connected to the thermally conductive members respectively, further increasing the heat dissipation capacity for the battery assembly, allowing the battery to maintain a relatively safe temperature range, and further reducing the safety hazards caused by poor heat dissipation of the battery.

In some embodiments of this application, along the second direction, the battery cell includes two opposite third surfaces, where the third surfaces are largest-area surfaces of the battery cell, and the two third surfaces of the battery cell are each thermally connected to one of the thermally conductive members. In the embodiments, the two largest-area third surfaces are provided, and the two third surfaces are each thermally connected to a thermally conductive member. This further increases the heat exchange efficiency between the battery cell and the thermally conductive members, thereby improving the heat dissipation performance of the battery cell and further reducing the safety hazards caused by high temperatures.

In some embodiments of this application, the battery cell includes an electrode assembly, where the electrode assembly includes a main body and a tab protruding from the main body, the tab being electrically connected to the electrode terminal; and along the second direction, the thermally conductive member and the main body at least partially overlap on projection, and the first direction, the second direction, and the third direction intersect with each other. In the embodiments, with the thermally conductive member and the main body at least partially overlapping along the second direction and having an overlapping region, effective heat exchange can be carried out on the main body through the thermally conductive member, thereby improving the heat exchange effect on the battery cell.

In some embodiments of this application, along the third direction, the main body has a size of L1, and the thermally conductive member has a size of L2, where 0.5≤L2/L1≤1.5.

In the embodiments, setting the range of L2/L1 within the interval [0.5, 1.5] can reduce the space occupied by the thermally conductive member in the third direction, thereby further improving the space utilization rate of the battery.

In some embodiments of this application, along the third direction, the overlapping region has a size of L3, where 0.5≤L3/L1≤1.

In the embodiments, setting the size of the overlapping region in the third direction allows reasonable setting of a heat exchange area between the thermally conductive member and the main body, greatly enhancing the heat exchange effect of the thermally conductive member on the main body.

In some embodiments of this application, the thermally conductive member is provided with a channel for accommodating a heat exchange medium. In the embodiments, the battery cell conducts heat transfer with the heat exchange medium inside the channel through the thermally conductive member, and the heat exchange medium can flow within the channel. This is a high-efficiency heat exchange method with a simple structure.

In some embodiments of this application, the battery further includes a current collecting member, where the current collecting member is fluidly connected to the thermally conductive member; and
the thermally conductive member is provided with the current collecting member at one end in the first direction, or the thermally conductive member is provided with the current collecting member at both ends in the first direction.

In the embodiments, with the current collecting member provided, the heat exchange medium in the thermally conductive member can be collected, reducing the number of components, and thereby improving the space utilization rate within the box. Additionally, when the battery is subjected to compression or impact in the second direction, the placement of the current collecting member can avoid the compression or impact, reducing the possibility of damage to the current collecting member, so that the heat exchange medium can fully dissipate heat from the battery cell, further reducing the safety hazards caused by high temperatures of the battery.

In some embodiments of this application, the current collecting member is provided in a quantity of two, where the two current collecting members are provided at one end of the thermally conductive member in the first direction, and the two current collecting members are arranged along the third direction. In the embodiments, with two current collecting members provided, the current collection performance of the heat exchange medium is improved, allowing the heat exchange medium to have a good flow rate, further enhancing the heat exchange capability of the heat exchange medium on the battery cell. Additionally, with the two current collecting members both provided at one end in the first direction and arranged along the third direction, a space occupied by the current collecting members along the first direction within the battery can be effectively reduced, thereby facilitating the arrangement of other structures within the battery.

In some embodiments of this application, the battery cell further includes a pressure relief mechanism, where the pressure relief mechanism is arranged on any surface of the battery cell. In the embodiments, when the battery cell undergoes thermal runaway, the pressure inside the battery cell can be released in a timely manner through the pressure relief mechanism, to avoid safety hazards such as explosions of the battery cell.

In some embodiments of this application, the pressure relief mechanism is arranged on the first surface or the second surface. In the embodiments, the placement of the pressure relief mechanism can meet the needs of different types of battery cells, further improving the safety performance of the battery.

In some embodiments of this application, the battery assembly includes at least two battery cells, where the at least two battery cells are arranged along the first direction. In the embodiments, arranging at least two battery cells along the first direction facilitates the arrangement of the battery cells within the box.

In some embodiments of this application, the battery cell includes an electrode assembly; where the electrode assembly is a wound structure and flat, with an outer surface of the electrode assembly including two flat surfaces, where the two flat surfaces face each other along the second direction;
or, the electrode assembly is a stacked structure, with a first electrode plate, a separator, and a second electrode plate of the electrode assembly stacked along the second direction;
where the second direction, the first direction, and the third direction intersect with each other.

In the embodiments, the electrode assembly is a wound structure and flat, with the outer surface of the electrode assembly including two flat surfaces, where the two flat surfaces face each other along the second direction, or the electrode assembly is a stacked structure. This reduces the space occupied by the electrode assembly in the first direction, facilitating the arrangement and installation of other components in the battery in the first direction.

In some embodiments of this application, along the first direction, the battery cell has a maximum size of L, and along the second direction, the battery cell has a maximum size of D, where the second direction, the first direction, and the third direction intersect with each other, and LID is within a range of 1 to 30. In the embodiments, setting the size of the battery cell in the first and second directions can maximize the capacity of the battery cell.

In some embodiments of this application, along the first direction, the battery cell has a maximum size of L, and along the third direction, the battery cell has a maximum size of H, where L/H is within a range of 0.5 to 6. In the embodiments, setting the battery cell according to the above size ratio can maximize the capacity of the battery cell.

In some embodiments of this application, the box includes a first portion and a second portion, the first portion and the second portion are detachably connected, and the second surface is provided in a quantity of at least one, where the at least one second surface is bonded to the first portion or the second portion. In the embodiments, setting the second surface to be bonded and fixed to the first or second portion of the box improves the convenience of the assembly process. Additionally, the high strength of the bonded connection effectively ensures the stability of the battery cell within the box.

In some embodiments of this application, the second surface is provided in a quantity of two, where the two second surfaces are arranged oppositely, the first portion is bonded to one of the second surfaces, and the second portion is bonded to the other of the second surfaces. In the embodiments, the second surface is provided in a quantity of two, and the two second surfaces are respectively bonded to the first and second portions of the box. This further improves the connection strength between the battery cell and the box and further enhances the stability of the battery cell within the box.

In some embodiments of this application, the second surface is fixedly connected to the first portion and/or the second portion through a first bonding layer, and the battery further includes the thermally conductive member, where the thermally conductive member is thermally connected to the largest-area surface of the battery cell through a second bonding layer, and a thermal conductivity of the first bonding layer is less than or equal to a thermal conductivity of the second bonding layer. In the embodiments, since the first bonding layer is used to connect the second surface and the box, and the second bonding layer is used for thermally connecting the largest-area surface of the battery cell and the thermally conductive member, the thermal conductivity of the first bonding layer is set to be less than or equal to that of the second bonding layer to ensure more effective heat dissipation for the battery cell through the thermally conductive member.

In some embodiments of this application, a ratio of the thermal conductivity of the first bonding layer to the thermal conductivity of the second bonding layer ranges from 0.1 to 1. In the embodiments, the setting of the ratio range can help effectively dissipate heat of the battery cell through the thermally conductive member.

In some embodiments of this application, the battery further includes a baffle, where the baffle is arranged along the third direction opposite to the first surface of the battery cell provided with the electrode terminal, and the electrode terminal is spaced from the baffle by 1.2 mm to 25 mm. In the embodiments, spacing the baffle from the electrode terminal by 1.2 mm to 25 mm can prevent the baffle from colliding with the electrode terminal when the battery is impacted along the second direction, thereby avoiding damage to the electrode terminal.

A second aspect of this application proposes an electric device including the foregoing battery, where the battery is configured to provide electrical energy to drive the electric device to travel.

In some embodiments of this application, when the lengthwise direction of the battery is different from the traveling direction of the electric device, the first direction is the traveling direction of the electric device.

In the embodiments, the first direction is set as the traveling direction of the electric device, the third direction intersects with both the first direction and the horizontal direction, and the battery cell located inside the box of the battery has a first surface and a second surface, with the first surface provided with the electrode terminal and the second surface connected to the box. The setting of the first direction facilitates the installation and arrangement of the battery on the electric device, thereby meeting the usage requirements of different electric devices by adjusting the arrangement of the battery cells inside the box.

The foregoing description is merely an overview and understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

FIG. 1 schematically shows a schematic structural diagram of a vehicle according to an embodiment of this application;
FIG. 2 schematically shows a schematic structural exploded view of a battery according to an embodiment of this application;
FIG. 3 schematically shows a schematic structural diagram of a battery assembly according to an embodiment of this application;
FIG. 4 schematically shows a schematic structural exploded view of a battery cell according to an embodiment of this application;
FIG. 5 schematically shows a schematic structural exploded view of a battery according to an embodiment of this application;
FIG. 6 schematically shows a schematic structural diagram of a battery assembly according to an embodiment of this application;
FIG. 7 is a schematic structural diagram of a battery cell in the battery assembly shown in FIG. 6;

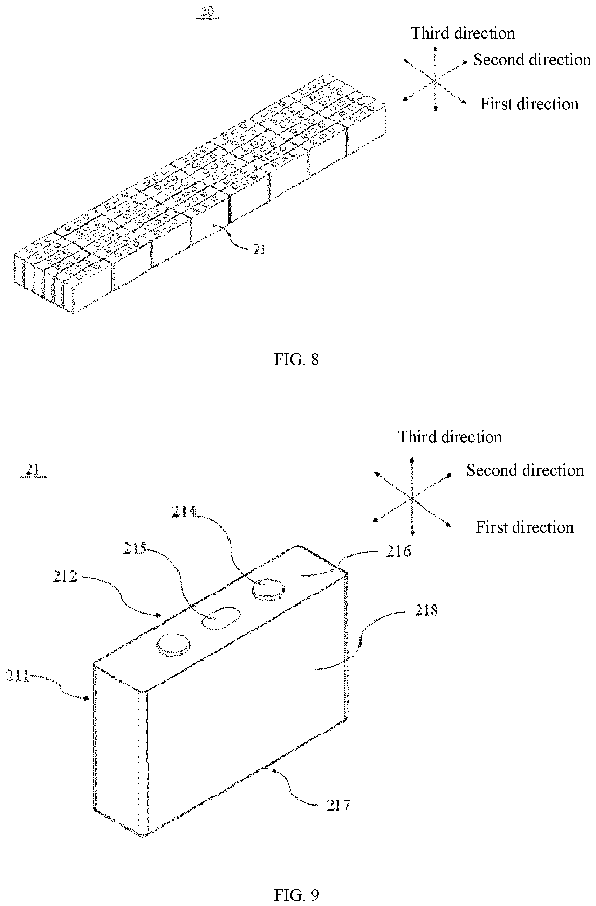

FIG. 8 schematically shows a schematic structural diagram of a battery assembly according to an embodiment of this application;
FIG. 9 is a schematic structural diagram of a battery cell in the battery assembly shown in FIG. 8;

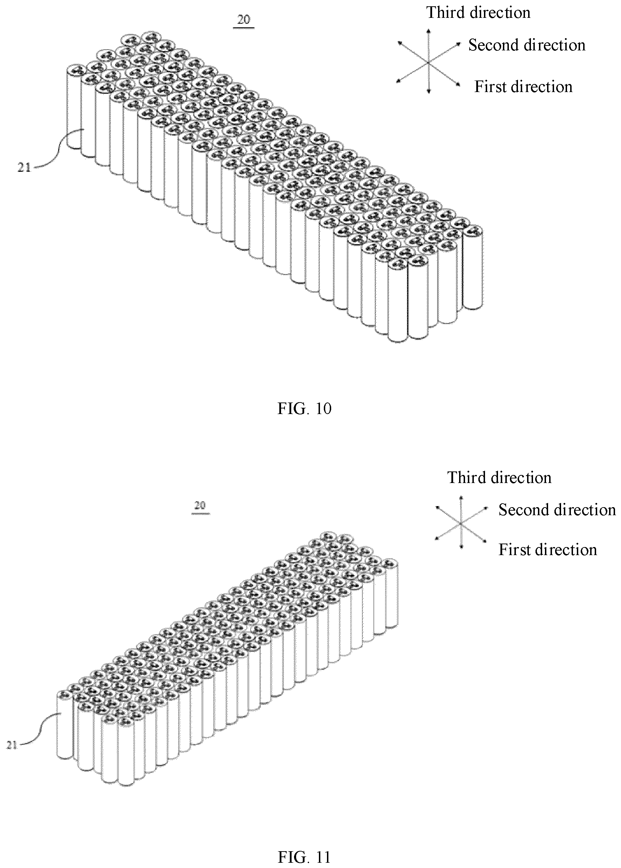

FIG. 10 schematically shows a schematic structural diagram of a battery assembly according to an embodiment of this application;
FIG. 11 schematically shows a schematic structural diagram of a battery assembly according to an embodiment of this application;

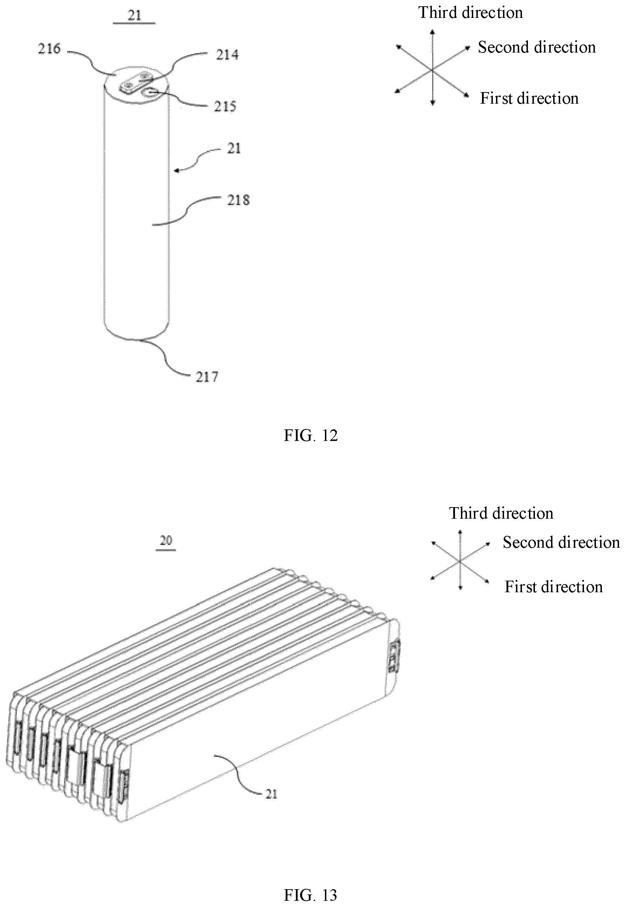

FIG. 12 is a schematic structural diagram of a battery cell in the battery assembly shown in FIG. 10 and FIG. 11;
FIG. 13 schematically shows a schematic structural diagram of a battery assembly according to an embodiment of this application;

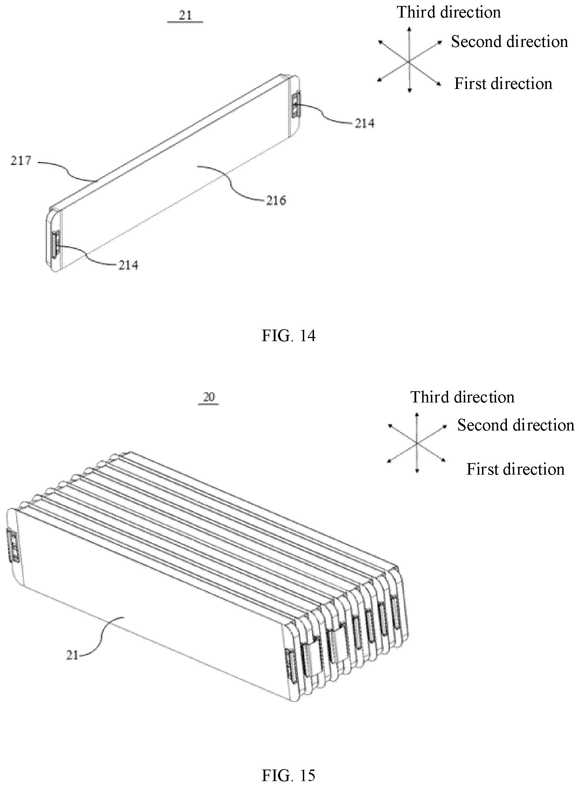

FIG. 14 is a schematic structural diagram of a battery cell in the battery assembly shown in FIG. 13;
FIG. 15 schematically shows a schematic structural diagram of a battery assembly according to an embodiment of this application;

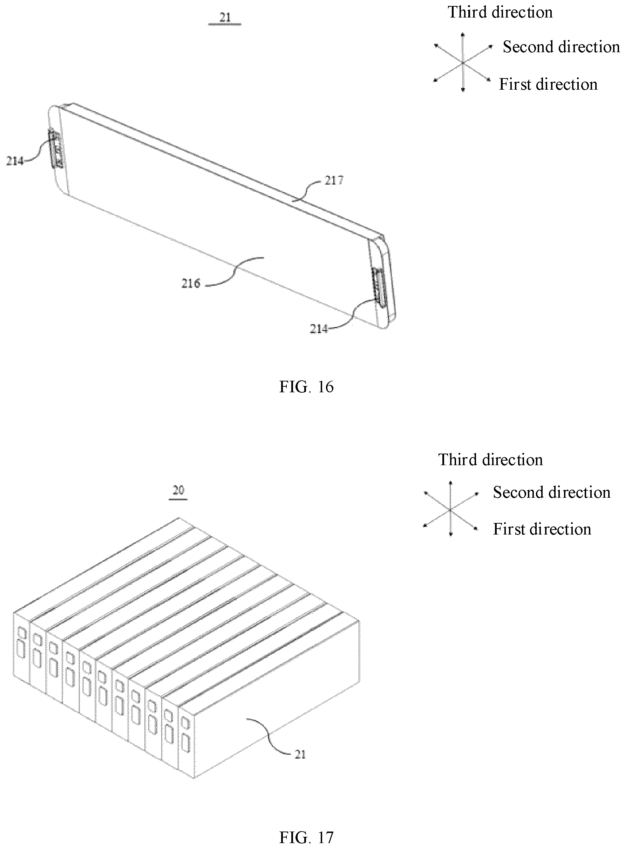

FIG. 16 is a schematic structural diagram of a battery cell in the battery assembly shown in FIG. 15;
FIG. 17 schematically shows a schematic structural diagram of a battery assembly according to an embodiment of this application;

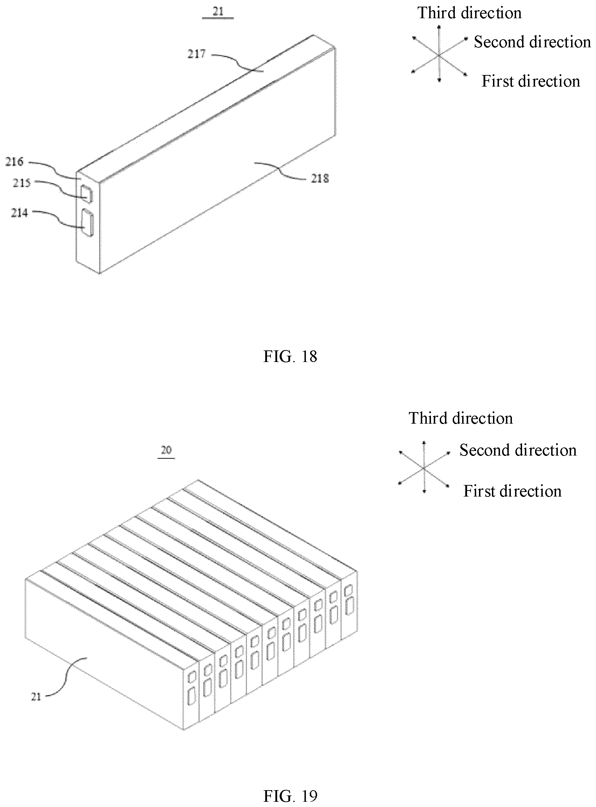

FIG. 18 is a schematic structural diagram of a battery cell in the battery assembly shown in FIG. 17;
FIG. 19 schematically shows a schematic structural diagram of a battery assembly according to an embodiment of this application;

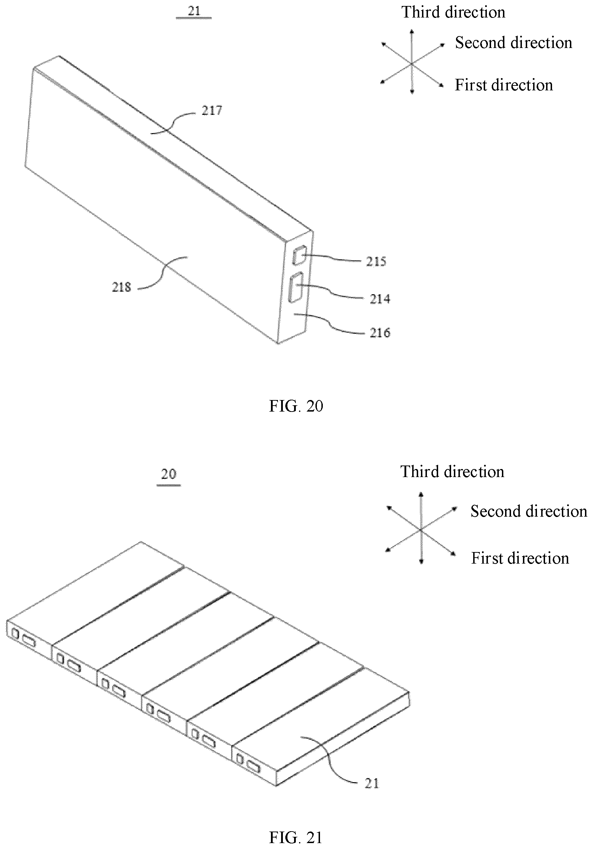

FIG. 20 is a schematic structural diagram of a battery cell in the battery assembly shown in FIG. 19;
FIG. 21 schematically shows a schematic structural diagram of a battery assembly according to an embodiment of this application;

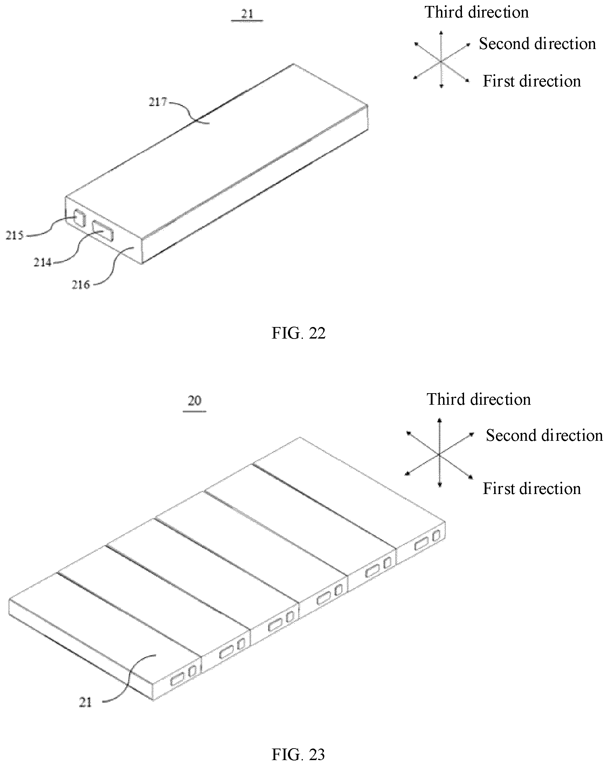

FIG. 22 is a schematic structural diagram of a battery cell in the battery assembly shown in FIG. 21;
FIG. 23 schematically shows a schematic structural diagram of a battery assembly according to an embodiment of this application;

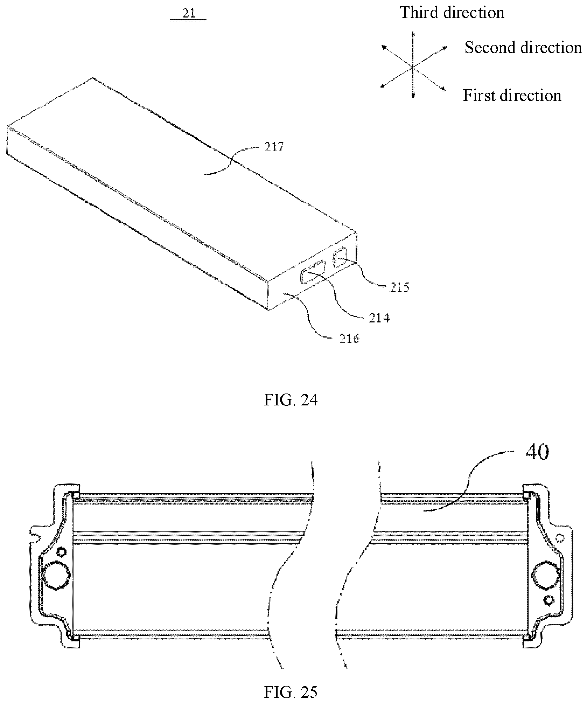

FIG. 24 is a schematic structural diagram of a battery cell in the battery assembly shown in FIG. 23;
FIG. 25 schematically shows a schematic structural diagram of a thermally conductive member according to an embodiment of this application;

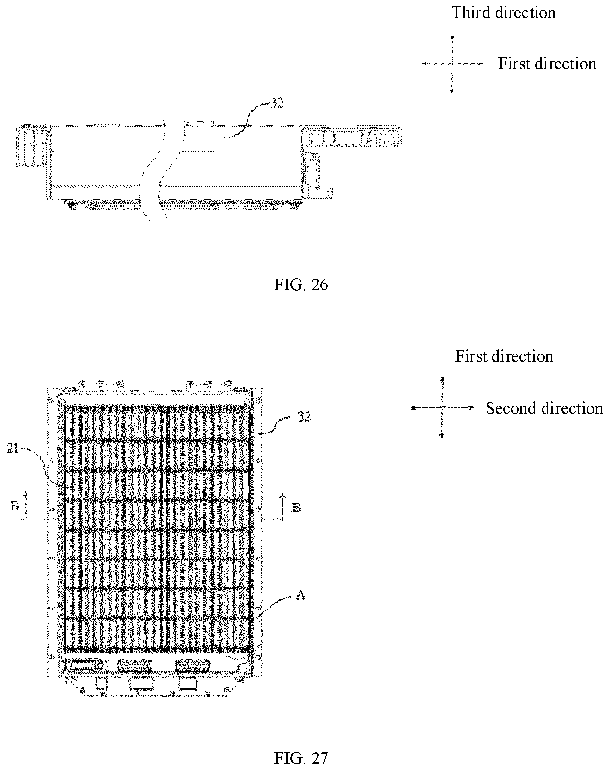

FIG. 26 schematically shows a schematic structural diagram of a second portion of a box according to an embodiment of this application;
FIG. 27 schematically shows a schematic structural diagram of a battery according to an embodiment of this application (a first portion of the box is not shown);

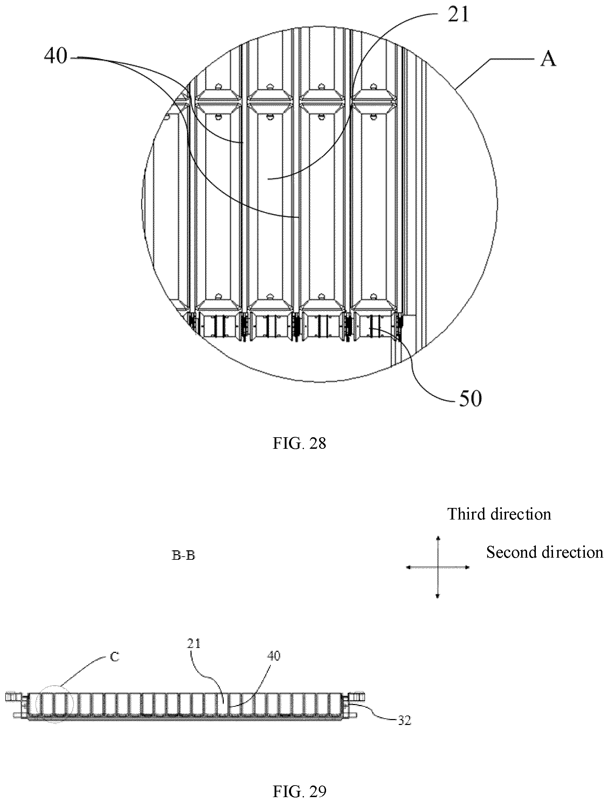

FIG. 28 is a schematic diagram of an enlarged structure of part A of the structure shown in FIG. 27;
FIG. 29 is a cross-sectional view of part B-B of the structure shown in FIG. 27;
FIG. 30 is a schematic diagram of an enlarged structure of part C of the structure shown in FIG. 29;
FIG. 31 is a cross-sectional view of the structure shown in FIG. 27;

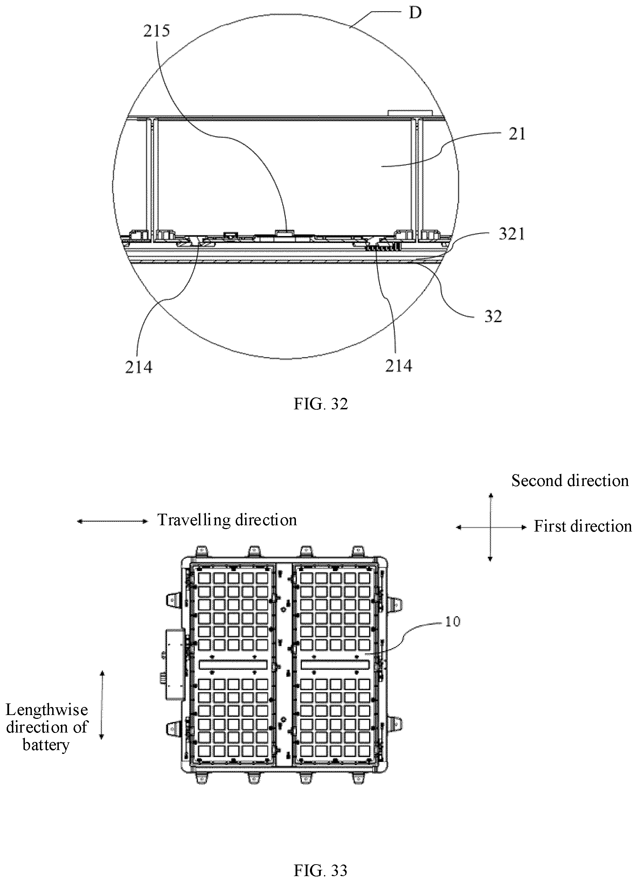

FIG. 32 is a schematic diagram of an enlarged structure of part D of the structure shown in FIG. 31; and
FIG. 33 is a schematic diagram of a distribution structure of a battery on a vehicle according to an embodiment of this application.

### Reference signs:

1. electric device;
10. battery; 11. controller; 12. motor;
20. battery assembly; 21. battery cell; 211. housing; 212. end cover; 213. electrode assembly; 2131. main body; 2132. tab; 214. electrode terminal; 215. pressure relief mechanism; 216. first surface; 217. second surface; 218. third surface;
30. box; 31. first portion; 32. second portion; 321. baffle;
40: thermally conductive member;
50: current collecting member;
60: first bonding layer; and
70: second bonding layer.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples that do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of the market development, application of electric vehicle batteries is becoming extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The applicant has noted that existing power batteries typically include a box and battery cells, with the battery cells being placed inside the box and fixed to the box by adhesive bonding. For battery cells with electrode terminals extending from the top and bottom, the adhesive bonding method is not convenient for maintenance and inspection of the battery. Therefore, how to solve the problem of inconvenience in maintaining and inspecting battery cells with electrode terminals extending from the top and bottom has become a technical issue urgently needing to be addressed by those skilled in the art.

To solve the problem of inconvenience in maintaining and inspecting battery cells with electrode terminals extending from the top and bottom, the inventors of this application have found that in the following case, the electrode terminals to be fully exposed after the box is opened and the convenience for maintenance and inspection of the battery is improved: a first surface and a second surface are arranged on the battery cell, the second surface intersecting with a third direction (the third direction intersects with both a first direction and a horizontal direction), where the first surface is provided with an electrode terminal and the second surface is connected to the box. This ensures that a connection surface of the battery cell to the box does not have electrode terminals, allowing the electrode terminal to be fully exposed after the box is opened. This improves the convenience for maintenance and inspection of the battery.

The battery cell involved in the embodiments of this application can be used, but not limited to, in electric apparatuses such as vehicles, ships, or aircrafts. The battery cell, battery, and the like involved in this application may be used to constitute a power supply system of that electric apparatus.

An electric apparatus that uses a battery as a power source in some embodiments of this application may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

It should be understood that the technical solutions described in the embodiments of this application are not only applicable to the batteries and electric devices described above, but also applicable to all batteries including a box and electric devices provided with batteries. However, for the brevity of description, in the following embodiments, an electric vehicle is used as an example for description.

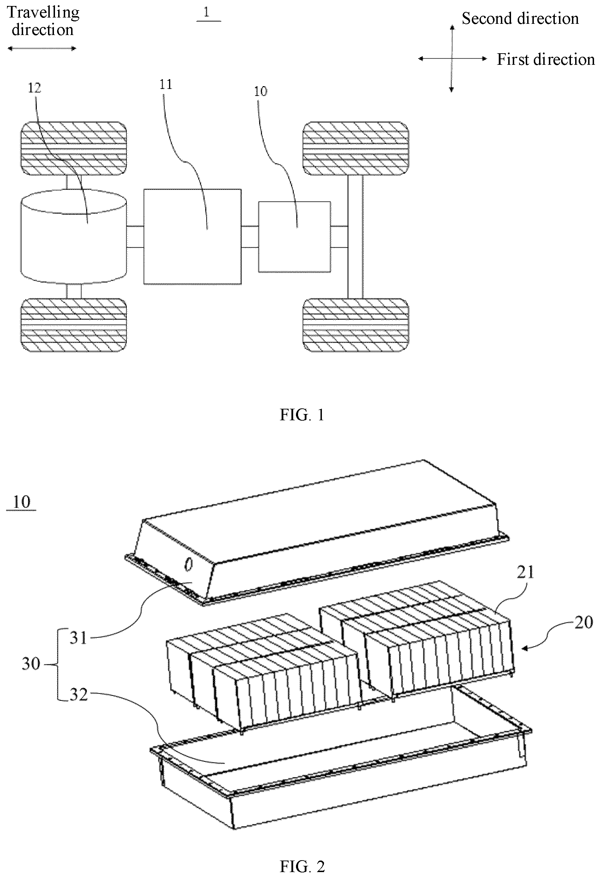

Refer to FIG. 1, which is a schematic structural diagram of a vehicle 1 according to some embodiments of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply power to the vehicle 1. For example, the battery 10 may be used as an operational power source for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power source for the vehicle 1 but also a driving power source for the vehicle 10, replacing or partially replacing fossil fuel or natural gas to provide driving traction for the vehicle 1.

In order to meet different requirements for power use, the battery 10 may include a plurality of battery cells. A battery cell is a smallest element constituting a battery assembly or battery pack. A plurality of battery cells can be connected in series and/or in parallel through electrode terminals for various application scenarios. The battery 10 mentioned in this application includes a battery assembly or a battery pack. The plurality of battery cells may be connected in series, parallel, or series-parallel, where being connected in series-parallel means a combination of series and parallel connections. The battery 10 may also be called a battery pack. In the embodiments of this application, the plurality of battery cells may be directly combined into a battery pack, or they may be first combined into battery assemblies which are then combined into a battery pack.

FIG. 2 is a schematic structural diagram of a battery 10 according to an embodiment of this application. In FIG. 2, the battery 10 may include a plurality of battery assemblies 20 and a box 30. The plurality of battery assemblies 20 are accommodated in the box 30. The box 30 is configured to accommodate the battery cells 21 or the battery assemblies 20 to prevent a liquid or another foreign matter from affecting charging or discharging of the battery cells. The box 30 may be a simple three-dimensional structure such as a rectangular structure or a cylindrical structure or a spherical structure, or may be a complex three-dimensional structure formed by combining simple three-dimensional structures such as a rectangular structure or a cylindrical structure or a spherical structure. This is not limited in the embodiments of this application. The box 30 may be made of an alloy material such as an aluminum alloy and an iron alloy, a polymer material such as polycarbonate and polyisocyanurate foam, or a composite material produced from materials such as glass fiber and epoxy resin. This is also not limited in the embodiments of this application.

In some embodiments, as shown in FIG. 2, the box 30 may include a first portion 31 and a second portion 32. The first portion 31 and the second portion 32 cover each other to jointly define a space for accommodating the battery cells 21. The second portion 32 may be a hollow structure with one end open, the first portion 31 may be a plate-like structure, and the first portion 31 covers an open side of the second portion 32, so that the first portion 31 and the second portion 32 jointly define a space for accommodating the battery cells 21. The first portion 31 and the second portion 32 may both be a hollow structure with one side open, and the open side of the first portion 31 covers the open side of the second portion 32.

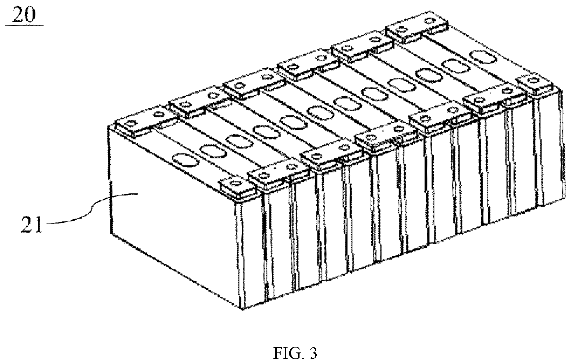

FIG. 3 is a schematic structural diagram of a battery assembly 20 according to an embodiment of this application. In FIG. 3, the battery assembly 20 may include a plurality of battery cells 21. The plurality of battery cells 21 may first be connected in series, parallel, or series and parallel to constitute battery assemblies 20, and then a plurality of battery assemblies 20 may be connected in series, parallel, or series and parallel to constitute a battery. In this application, the battery cell 21 may include a lithium-ion battery, a sodium-ion battery, a magnesium-ion battery, or the like. This is not limited in the embodiments of this application. The battery cell 21 may be cylindrical, flat, rectangular, or another shape, and this is also not limited in the embodiments of this application. The battery cells 21 are usually categorized into three types depending on their packaging: cylinder cell, prismatic cell, and pouch battery cell, and this is also not limited in the embodiments of this application.

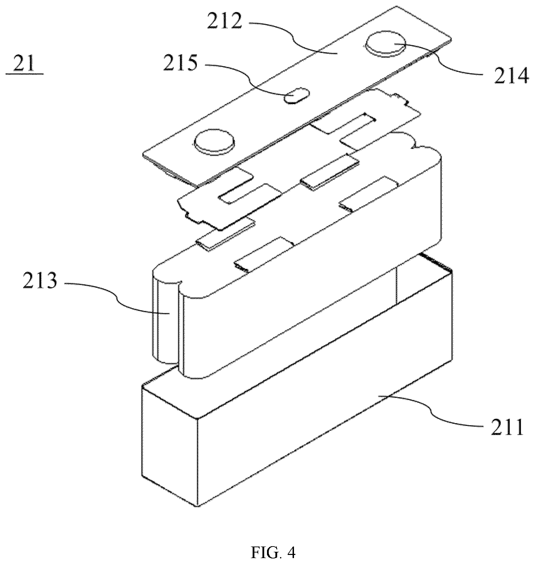

FIG. 4 is a schematic structural diagram of a battery cell 21 according to an embodiment of this application. The battery cell 21 in the embodiments of this application includes a housing 211, an end cover 212, and an electrode assembly 213.

The end cover 212 is a component that closes over an opening of the housing 211 to separate the internal environment of the battery cell 21 from the external environment. The shape of the end cover 212 is not limited and may be adapted to the shape of the housing 211 to fit the housing 211. Optionally, the end cover 212 may be made of a material with specified hardness and strength (for example, aluminum alloy), so that the end cover 212 is less likely to deform when subjected to extrusion and collision, allowing the battery cell 21 to have higher structural strength and enhanced safety performance. The end cover 212 may also be made of various materials, such as copper, iron, aluminum, stainless steel, aluminum alloy, and plastic, which are not particularly limited in the embodiments of this application. In some embodiments, an insulator may also be provided at an inner side of the end cover 212. The insulator may be configured to isolate an electrically connected component in the housing 211 from the end cover 212 to reduce a risk of short circuit. For example, the insulator may be made of plastic, rubber, or the like.

The housing 211 is an assembly configured to form an internal environment of the battery cell 21 together with the end cover 212, where the formed internal environment may be configured to accommodate the electrode assembly 213, an electrolyte, and other components. The housing 211 and the end cover 212 may be independent components, an opening may be provided in the housing 211, and the end cover 212 covers the opening to form the internal environment of the battery cell 21. The end cover 212 and the housing 211 are not limited and may also be integrated. Specifically, the end cover 212 and the housing 211 may form a shared connection surface before other components are disposed inside the housing, and then the housing 211 is covered with the end cover 212 when the inside of the housing 211 needs to be enclosed. The housing 211 may be of various shapes and sizes, such as a cuboid shape, a cylindrical shape, and a hexagonal prism shape. Specifically, the shape of the housing 211 may be determined based on a specific shape and size of a cell assembly. The housing 211 may be made of various materials, such as copper, iron, aluminum, stainless steel, aluminum alloy, and plastic, which are not particularly limited in the embodiments of this application.

In some embodiments of this application, as shown in FIG.s 5 to 33, this application proposes a battery 10, where the battery 10 includes a box 30 and a battery assembly 20. The battery assembly 20 is accommodated within the box 30, and the battery assembly 20 includes at least one battery cell 21. The battery assembly 20 is arranged along a first direction, the first direction is a lengthwise direction of the battery 10 or a traveling direction of an electric device provided with the battery 10. The battery cell 21 has a first surface 216 and a second surface 217, the first surface 216 is provided with an electrode terminal 214, the second surface 217 is connected to the box 30, the second surface 217 intersects with a third direction, and the third direction intersects with both the first direction and the horizontal plane.

When the battery 10 is used in an electric device, taking a vehicle 1 as an example, the vehicle 1 can travel under the driving of the battery 10. The battery assembly 20 constituting the battery 10 is arranged along the first direction, where the first direction can be a traveling direction of the vehicle 1, that is, the battery assembly 20 is provided in the traveling direction of the vehicle 1. Additionally, in this application, the battery 10 has a rectangular structure, with a lengthwise direction, a width direction, and a height direction. The battery assembly 20 located within the box 30 is arranged along the first direction, where the first direction can also be the lengthwise direction of the battery 10.

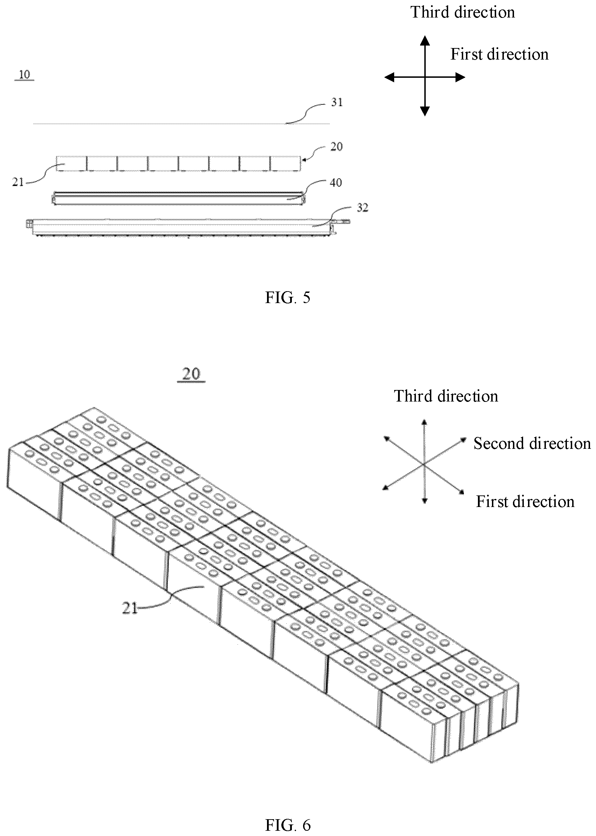

As shown in FIG. 5, in FIG. 5, the box 30 can include a first portion 31 and a second portion 32, with the second portion 32 being a hollow structure open at one end, and the first portion 31 being a plate-like structure. The first portion 31 covers the open side of the second portion 32, so that the first portion 31 and the second portion 32 together define a space for accommodating the battery cell 21. When it is necessary to maintain or inspect the battery 10, the cooperation between the first portion 31 and the second portion 32 is released, and then the first portion 31 and the second portion 32 are separated to expose the battery cell 21 to the outside, thereby enabling maintenance and inspection of the battery 10.

In this application, the battery cell 21 is provided inside the box 30, and the number of battery cells 21 can be one or greater than or equal to two. As shown in FIG. 5, the number of battery cells 21 in FIG. 5 is greater than two, where multiple battery cells 21 are arranged along the first direction.

Specifically, the battery cell 21 has a first surface 216 and a second surface 217, the second surface 217 intersecting with the third direction (the third direction intersects with both the first direction and the horizontal direction). The first surface 216 is provided with an electrode terminal 214, and the second surface 217 is connected to the box 30, ensuring that a connection surface of the battery cell 21 within the box 30 does not have electrode terminals 214. This allows the electrode terminals 214 to be fully exposed to the outside after the box 30 is opened, enabling maintenance and inspection of the battery 10 without separating the battery cell 21 from the box 30 after the box 30 is opened, and thereby improving the convenience for maintenance and inspection of the battery 10.

In some embodiments of this application, the lengthwise direction of the battery 10 is parallel to or intersects with the traveling direction of the electric device.

In this application, the traveling direction of the electric device refers to an ability of the electric device to produce relative displacement, the relative displacement can be forward or backward. When the lengthwise direction of the battery 10 is parallel to the traveling direction of the electric device, the lengthwise direction of the battery 10 is arranged along the traveling direction of the electric device. When the lengthwise direction of the battery 10 intersects with the traveling direction of the electric device, the lengthwise direction of the battery 10 is provided at an angle to the traveling direction of the electric device, the angle being not equal to 0.

Specifically, the relationship between the lengthwise direction of the battery 10 and the traveling direction of the electric device is set, so that the battery 10 can be installed on the electric device according to the needs of the electric device, thereby improving the convenience of arranging the battery 10 in the electric device.

In some embodiments of this application, along the third direction, the first surface 216 and the second surface 217 are arranged oppositely, and the battery cell 21 further has a third surface 218. The third surface 218 is a largest-area surface of the battery cell 21, arranged along the third direction and intersecting with the horizontal plane, and the third surface 218 is connected to both the first surface 216 and the second surface 217.

In this application, the battery cell 21 has multiple surfaces, and the third surface 218 is the largest-area surface, that is, other surfaces of the battery cell 21 have smaller areas than the third surface 218.

Specifically, the third surface 218 is arranged along the third direction and intersects with the horizontal plane, the first surface 216 and the second surface 217 being arranged oppositely in the third direction, that is, the first surface 216 and the second surface 217 being parallel and spaced apart. The first surface 216 and the second surface 217 are opposite in the third direction, and the electrode terminal 214 is arranged on the first surface 216, that is, the battery cell 21 has electrode terminals 214 extending in the upward and downward directions (third direction). During maintenance or inspection of the battery 10, the second surface 217 of the battery cell 21 is connected to the box 30 of the battery 10 after the box 30 is opened, allowing the electrode terminals 214 on the first surface 216 to be exposed to the outside. This facilitates maintenance and inspection of the battery 10 without separating the battery cell 21 from the box 30 after the box 30 is opened, further improving the convenience for maintenance and inspection of the battery 10.

Additionally, since the third surface 218 is a largest-area surface, and the second surface 217 has a smaller area than the third surface 218, it is possible to connect more battery cells 21 per unit area of the box 30, thereby improving the energy density of the battery 10.

It should be noted that, as shown in FIG.s 6 to 12, in this application, both the first direction and the second direction are within the horizontal plane, and the third direction is within the vertical plane, the first direction, the second direction, and the third direction being perpendicular to each other. The first direction is the traveling direction of the electric device, the second direction is perpendicular to the traveling direction of the electric device, and the third direction is perpendicular to both the first direction and the second direction.

In some embodiments of this application, the third surface 218 is provided in a quantity of two, the two third surfaces 218 being arranged oppositely along the first direction, and the battery cell 21 includes two oppositely polarized electrode terminals 214, the two oppositely polarized electrode terminals 214 being both arranged on the first surface 216.

In the embodiments, as shown in FIG.s 8 and 9, the battery cell 21 has the first surface 216, the second surface 217, and the two third surfaces 218, where the first surface 216 and the second surface 217 are arranged oppositely in the third direction, and the two third surfaces 218 are arranged oppositely in the first direction, thereby making the battery cell 21 form a square shell battery cell.

Specifically, the battery cell 21 is provided with two third surfaces 218, the two third surfaces 218 are both largest-area surfaces, the first surface 216 and the second surface 217 are arranged oppositely in the third direction, and the two third surfaces 218 are arranged oppositely in the first direction. This further improves the convenience of arranging the battery cell 21 within the battery 10 to meet installation requirements of different batteries 10.

It should be understood that the structure of the square shell battery cell is provided within the box 30, and a large surface (the largest-area surface, that is, the third surface 218) of the square shell battery cell intersects with the first direction. This not only improves the space utilization rate within the box 30, allowing the energy density of the battery 10 to be increased, but also facilitates the arrangement of the square shell battery cell within the box 30, making the square shell battery cell meet installation requirements of different batteries 10.

It should be pointed out that when the battery cell 21 is a square shell battery cell, the first surface 216 and the second surface 217 respectively form the top and bottom surfaces of the square shell battery cell, that is, one of the first surface 216 and the second surface 217 is the top surface of the square shell battery cell, and the other is the bottom surface of the square shell battery cell. The two oppositely polarized electrode terminals 214 are both arranged on the first surface 216, making the square shell battery cell have a structure with electrode terminals 214 extending from the top or bottom. During maintenance or inspection of the battery 10, the box 30 can be opened in the upward and downward directions, thereby improving the convenience for maintenance and inspection of the battery 10.

In some embodiments of this application, the third surface 218 is provided in a quantity of two, where the two third surfaces 218 are arranged oppositely along the second direction, and the second direction, the first direction, and the third direction intersect with each other. The battery cell 21 includes two oppositely polarized electrode terminals 214, both oppositely polarized electrode terminals 214 being arranged on the first surface 216.

In the embodiments, as shown in FIG.s 6 and 7, the battery cell 21 has the first surface 216, the second surface 217, and the two third surfaces 218, where the first surface 216 and the second surface 217 are arranged oppositely in the third direction, and the two third surfaces 218 are arranged oppositely in the second direction, thereby making the battery cell 21 form a square shell battery cell.

Specifically, the battery cell 21 is provided with two third surfaces 218, the two third surfaces 218 are both largest-area surfaces, the first surface 216, the second surface 217 are arranged oppositely in the third direction, and the two third surfaces 218 are arranged oppositely in the second direction. This further improves the convenience of arranging the square shell battery cell within the battery 10 to meet installation requirements of different batteries 10.

It should be understood that the structure of the square shell battery cell is provided within the box 30, and a large surface (the largest-area surface, that is, the third surface 218) of the square shell battery cell intersects with the second direction. This not only improves the space utilization rate within the box 30, allowing the energy density of the battery 10 to be increased, but also facilitates the arrangement of the square shell battery cell within the box 30, making the battery cell 21 meet installation requirements of different batteries 10.

It should be pointed out that when the battery cell 21 is a square shell battery cell, the first surface 216 and the second surface 217 respectively form the top and bottom surfaces of the square shell battery cell, that is, one of the first surface 216 and the second surface 217 is the top surface of the square shell battery cell, and the other is the bottom surface of the square shell battery cell. The two oppositely polarized electrode terminals 214 are both arranged on the first surface 216, making the square shell battery cell have a structure with electrode terminals 214 extending from the top or bottom. During maintenance or inspection of the battery 10, the box 30 can be opened in the upward and downward directions, thereby improving the convenience for maintenance and inspection of the battery 10.

In some embodiments of this application, the third surface 218 is provided in a quantity of one, and the battery cell 21 includes two oppositely polarized electrode terminals 214, where one of the two oppositely polarized electrode terminals 214 is arranged on the first surface 216, and the housing 211 of the battery cell 21 forms the other of the two oppositely polarized electrode terminals 214.

In the embodiments, as shown in FIG.s 10 to 12, the battery cell 21 has the first surface 216, the second surface 217, and one third surface 218, where the first surface 216 and the second surface 217 are opposite to each other in the third direction, and the third surface 218 is provided in the third direction and intersects with the horizontal plane, thereby making the battery cell 21 form a cylindrical battery cell.

Specifically, the battery cell 21 is provided with one third surface 218, the one third surface 218 is a largest-area surface, and the first surface 216 and the second surface 217 are opposite to each other in the third direction. This further improves the convenience of arranging the battery cell 21 within the battery 10 to meet installation requirements of different batteries 10.

It should be understood that the structure of the cylindrical battery cell is provided within the box 30, a large surface (the largest-area surface, that is, the third surface 218) of the cylindrical battery cell is an outer circumferential surface of the cylindrical battery cell, and setting the battery cell 21 as a cylindrical battery cell makes it easier for the battery cell 21 to be provided and installed within the box 30. This not only improves the space utilization rate within the box 30 but also increases the energy density of the battery 10.

It should be pointed out that when the battery cell 21 is a cylindrical battery cell, the first surface 216 and the second surface 217 respectively form the top and bottom surfaces of the cylindrical battery cell, that is, one of the first surface 216 and the second surface 217 is the top surface of the cylindrical battery cell, and the other is the bottom surface of the cylindrical battery cell. One of the two oppositely polarized electrode terminals 214 is arranged on the first surface 216, and the housing 211 of the cylindrical battery cell forms the other electrode terminal 214, making the cylindrical battery cell have a structure with electrode terminals 214 extending from the top or bottom. During maintenance or inspection of the battery 10, the box 30 can be opened in the upward and downward directions, thereby improving the convenience for maintenance and inspection of the battery 10.

In some embodiments of this application, the battery cell 21 further has a third surface 218, where the third surface 218 is a largest-area surface of the battery cell 21, third surface 218 is arranged along the third direction and intersects with the horizontal plane, and the first surface 216, the second surface 217, and the third surface 218 intersect with each other.

Specifically, as shown in FIG.s 17 to 20, the first surface 216 intersects with both the second surface 217 and the third surface 218, the second surface 217 intersects with the third direction, and the second surface 217 forms the top or bottom surface of the battery cell 21, with the first surface 216 and the third surface 218 forming the outer circumferential surface of the battery cell 21. The electrode terminal 214 is arranged on the first surface 216, and the second surface 217 is connected to the box 30 of the battery 10. During maintenance and inspection of the battery 10, after the box 30 of the battery 10 is opened, the first surface 216 with the electrode terminal 214 is exposed to the outside without separating the second surface 217 from the box 30. This facilitates maintenance and inspection of the battery 10 through the electrode terminal 214, further improving the convenience for maintenance and inspection of the battery 10.

It should be understood that the second surface 217 is connected to the box 30, the first surface 216 is adjacent to the second surface 217, and the electrode terminal 214 is arranged on the first surface 216. Even in a case that the second surface 217 is connected to the box 30, the electrode terminal 214 is not obstructed, thereby effectively enabling maintenance and inspection of the battery 10 through the electrode terminal 214.

In some embodiments of this application, the first surface 216 is provided in a quantity of two, where the two first surfaces 216 are arranged oppositely along the first direction; and the battery cell 21 includes two oppositely polarized electrode terminals 214, where the two oppositely polarized electrode terminals 214 are either arranged on one of the first surfaces 216 or respectively arranged on the two first surfaces 216.

Specifically, as shown in FIG.s 17 and 18, the third surface 218 is a largest-area surface of the battery cell 21, with the first surface 216, the second surface 217, and the third surface 218 intersecting with each other, where the first surface 216 is provided in a quantity of two, and the two first surfaces 216 are arranged oppositely along the first direction. The two first surfaces 216 are provided, where the two first surfaces 216 are arranged oppositely along the first direction, and the two oppositely polarized electrode terminals 214 can be arranged on one of the first surfaces 216 or respectively on the two first surfaces 216. This improves the convenience of arranging the electrode terminals 214 while ensuring good convenience for maintenance and inspection of the battery 10, meeting the diverse needs of the battery 10.

In some embodiments of this application, the first surface 216 is provided in a quantity of two, where the two first surfaces 216 are arranged oppositely along the second direction, and the second direction, the first direction, and the third direction intersect with each other. The battery cell 21 includes two oppositely polarized electrode terminals 214, where the two oppositely polarized electrode terminals 214 are either arranged on one of the first surfaces 216 or respectively arranged on the two first surfaces 216.

Specifically, as shown in FIG.s 19 and 20, the third surface 218 is a largest-area surface of the battery cell 21, with the first surface 216, the second surface 217, and the third surface 218 intersecting with each other, where the first surface 216 is provided in a quantity of two, and the two first surfaces 216 are arranged oppositely along the second direction. The two first surfaces 216 are provided, where the two first surfaces 216 are arranged oppositely along the second direction, and the two oppositely polarized electrode terminals 214 can be arranged on one of the first surfaces 216 or respectively on the two first surfaces 216. While ensuring good convenience for maintenance and inspection of the battery 10, this further improves the convenience of arranging the electrode terminals 214, further meeting the diverse needs of the battery 10.

In some embodiments of this application, the second surface 217 is a largest-area surface of the battery cell 21, where the first surface 216 has a smaller area than the second surface 217, and the first surface 216 is arranged along the first direction and intersects with the second surface 217; and the battery cell 21 includes two first surfaces 216, where the two first surfaces 216 are arranged oppositely along the second direction, and the second direction, the first direction, and the third direction intersect with each other. The battery cell 21 includes two oppositely polarized electrode terminals 214, where the two oppositely polarized electrode terminals 214 are both arranged on a same one of the first surfaces 216, or the two oppositely polarized electrode terminals 214 are respectively arranged on the two first surfaces 216.

Specifically, as shown in FIG.s 21 and 22, the second surface 217 is connected to the box 30 of the battery cell 21, with the second surface 217 being a largest-area surface, thereby increasing a contact area between the second surface 217 and the box 30, and thus improving the connection strength and stability between the battery cell 21 and the box 30.

Additionally, the first surface 216 and the second surface 217 intersect, with the electrode terminal 214 arranged on the first surface 216, ensuring that a surface connected to the box 30 does not have electrode terminals 214, thereby facilitating the full exposure of the electrode terminals 214 after the box 30 is opened, further improving the convenience for maintenance and inspection of the battery 10.

Furthermore, the two first surfaces 216 are arranged oppositely along the second direction and intersect with the second surface 217, and the two oppositely polarized electrode terminals 214 are arranged on one of the first surfaces 216 or respectively on the two first surfaces 216. This further improves the convenience of arranging the electrode terminals 214 while ensuring good convenience for maintenance and inspection of the battery 10, further meeting the diverse needs of the battery 10.

In some embodiments of this application, the second surface 217 is a largest-area surface of the battery cell 21, where the first surface 216 has a smaller area than the second surface 217, and the first surface 216 is arranged along the second direction and intersects with the second surface 217, and the second direction, the first direction, and the third direction intersect with each other; and the battery cell 21 includes two first surfaces 216, where the two first surfaces 216 are arranged oppositely along the first direction. The battery cell 21 includes two oppositely polarized electrode terminals 214, where the two oppositely polarized electrode terminals 214 are both arranged on a same one of the first surfaces 216, or one of the two oppositely polarized electrode terminals 214 is arranged on one of the first surfaces 216 and the other on the other first surface 216.

Specifically, as shown in FIG.s 23 and 24, the second surface 217 is connected to the box 30 of the battery cell 21, with the second surface 217 being a largest-area surface, thereby increasing a contact area between the second surface 217 and the box 30, and thus improving the connection strength and stability between the battery cell 21 and the box 30.

Additionally, the first surface 216 and the second surface 217 intersect, with the electrode terminal 214 arranged on the first surface 216, ensuring that a surface connected to the box 30 does not have electrode terminals 214, thereby facilitating the full exposure of the electrode terminals 214 after the box 30 is opened, further improving the convenience for maintenance and inspection of the battery 10.

Furthermore, the two first surfaces 216 are arranged oppositely along the first direction and intersect with the second surface 217, and the two oppositely polarized electrode terminals 214 are arranged on one of the first surfaces 216 or respectively on the two first surfaces 216. While ensuring good convenience for maintenance and inspection of the battery 10, this further improves the convenience of arranging the electrode terminals 214, further meeting the diverse needs of the battery 10.

In some embodiments of this application, the first surface 216 is a largest-area surface of the battery cell 21.

Specifically, as shown in FIG.s 13 to 16, the first surface 216 is part of the surfaces constituting the battery cell 21, where the battery cell 21 has multiple surfaces, the first surface 216 is the largest, and the electrode terminal 214 is arranged on the first surface 216. Therefore, during maintenance and inspection of the battery 10, sufficient operational space can be provided for maintenance and inspection, further improving the convenience for maintenance and inspection of the battery 10.

It should be noted that when multiple battery cells 21 are provided, among two adjacent battery cells 21, the electrode terminal 214 of one battery cell 21 corresponds to a recess of another battery cell 21. A concave-convex structure is used to make a combined structure of the adjacent two battery cells 21 more compact, thereby improving the space utilization rate within the box 30 and effectively increasing the energy density of the battery 10.

In some embodiments of this application, the battery cell 21 includes the first surface 216 and a fourth surface opposite to the first surface 216, where the first surface 216 and the fourth surface are arranged oppositely along the first direction, the fourth surface is provided with a recess on edge, the first surface 216 is used for arranging the electrode terminal 214, and the electrode terminal 214 protrudes in the second direction from the first surface 216 and corresponds to the recess.

Specifically, as shown in FIG.s 13 and 14, the first surface 216 is a largest-area surface, a fourth surface is provided, and the fourth surface is opposite to the first surface 216 along the first direction. During maintenance and inspection of the battery 10, while providing sufficient operational space for maintenance and inspection, the diverse needs of the battery 10 are met.

Additionally, with the first surface 216 and the fourth surface arranged oppositely along the first direction, effective arrangement of the electrode terminal 214 is facilitated to meet the electrical lead-out requirements of different batteries 10, thereby ensuring effective power supply of the battery 10.

In some embodiments of this application, the battery cell 21 includes the first surface 216 and a fourth surface opposite to the first surface 216, where the first surface 216 and the fourth surface are arranged oppositely along the second direction, the second direction, the first direction, and the third direction intersect with each other, the fourth surface is provided with a recess on edge, the first surface 216 is used for arranging the electrode terminal 214, and the electrode terminal 214 protrudes in the second direction from the first surface 216 and corresponds to the recess.

Specifically, as shown in FIG.s 15 and 16, two first surfaces 216 are provided, the two first surfaces 216 are largest-area surfaces, and the two first surfaces 216 are arranged oppositely along the second direction. During maintenance and inspection of the battery 10, while providing sufficient operational space for maintenance and inspection, the diverse needs of the battery 10 are further met.

Additionally, with the two first surfaces 216 arranged oppositely along the second direction, effective arrangement of the electrode terminal 214 is facilitated to meet the electrical lead-out requirements of different batteries 10, thereby ensuring effective power supply of the battery 10.

In some embodiments of this application, the battery 10 further includes a thermally conductive member 40, where the thermally conductive member 40 is arranged along the first direction, and the thermally conductive member 40 is at least thermally connected to a largest-area surface of the battery cell 21.

Specifically, as shown in FIG.s 25, 27, and 28, the battery 10 further includes a thermally conductive member 40, where the thermally conductive member 40 is provided within the box 30 of the battery 10, and the thermally conductive member 40 is arranged along the first direction. A largest-area surface of the battery cell 21 is thermally connected to the thermally conductive member 40, increasing a contact area between the battery cell 21 and the thermally conductive member 40, thereby increasing the heat exchange efficiency between the battery cell 21 and the thermally conductive member 40, reducing the safety hazards caused by poor heat dissipation of the battery 10.

Additionally, in this application, the first direction is the traveling direction of the electric device, the second direction is in a same plane as the first direction, and the second direction is perpendicular to the first direction. When an external impact occurs on the electric device along the second direction, the ends of the thermally conductive member 40 can be effectively protected, thereby preventing the thermally conductive member 40 from becoming ineffective due to damage to its ends.

In some embodiments of this application, the battery 10 includes at least two battery assemblies 20; where along the second direction, two sides of the thermally conductive member 40 are thermally connected to the two battery assemblies 20 respectively, and the second direction, the first direction, and the third direction intersect with each other.

Specifically, as shown in FIG.s 27 and 28, the thermally conductive member 40 is provided between two battery assemblies 20 and is thermally connected to both battery assemblies 20. The second direction is a width direction of the battery 10 or a lateral direction of the traveling direction of the electric device. With both sides of the thermally conductive member 40 thermally connected to the largest-area surface of the battery cell 21, the heat exchange effect of the thermally conductive member 40 on the battery cell 21 is improved.

Additionally, the battery assemblies 20 located within the box 30 are all thermally connected to the thermally conductive member 40, further ensuring adequate heat dissipation of the battery assemblies 20, reducing the safety hazards caused by poor heat dissipation of the battery 10.

In some embodiments of this application, the battery 10 includes multiple thermally conductive members 40, where the multiple thermally conductive members 40 are arranged along the second direction, and the second direction, the first direction, and the third direction intersect with each other.

Specifically, as shown in FIG.s 27 and 28, multiple thermally conductive members 40 are provided, further increasing the heat exchange capacity for the battery cell 21, allowing the battery 10 to maintain a relatively safe temperature range, and further reducing the safety hazards due to poor heat dissipation.

In some embodiments of this application, along the second direction, the battery assembly 20 is provided with thermally conductive members 40 on both sides, where the battery assembly 20 is thermally connected to the thermally conductive members 40 on both sides.

Specifically, as shown in FIG.s 27 and 28, both sides of the battery assembly 20 are thermally connected to the thermally conductive members 40, further increasing the heat dissipation capacity of the battery assembly 20, allowing the temperature of the battery 10 to be maintained within a relatively safe temperature range, and further reducing the safety hazards caused by poor heat dissipation.

In some embodiments of this application, along the second direction, the battery cell 21 includes two opposite third surfaces 218, where the third surfaces 218 are the largest-area surfaces of the battery cell 21, and the two third surfaces 218 of the battery cell 21 are each thermally connected to one of the thermally conductive members 40.

Specifically, as shown in FIG.s 27 and 28, two largest-area third surfaces 218 are provided, and the two third surfaces 218 are each thermally connected to a thermally conductive member 40. This further increases the heat exchange efficiency between the battery cell 21 and the thermally conductive members 40, thereby improving the heat dissipation performance of the battery cell 21, and further reducing the safety hazards due to high temperatures in the battery 10.

In some embodiments of this application, the thermally conductive member 40 can be an electronic cooling plate, such as PTC.

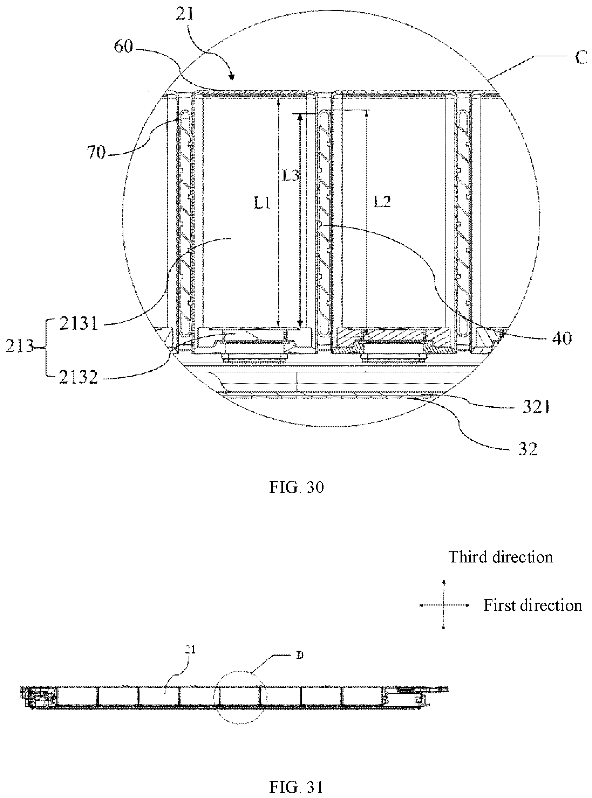

In some embodiments of this application, as shown in FIG. 30, the battery cell 21 includes an electrode assembly 213, where the electrode assembly 213 includes a main body 2131 and a tab 2132 protruding from the main body 2131, the tab 2132 being electrically connected to the electrode terminal 214; and along the second direction, the thermally conductive member 40 and the main body 2131 at least partially overlap in projection and have an overlapping region, and the first direction, the second direction, and the third direction intersect with each other.

Specifically, during the use of the battery cell 21, the heat generation is mainly concentrated on the main body 2131 of the electrode assembly 213. With the overlapping region provided between the thermally conductive member 40 and the main body 2131, the main body 2131 can effectively dissipate heat through the thermally conductive member 40, improving the heat exchange performance of the thermally conductive member 40 for the main body 2131, allowing the battery cell 21 to be maintained below a safe temperature, thereby enhancing safety during use.

In conjunction with FIG.s 29 and 30, in some embodiments of this application, along the third direction, the main body 2131 has a size of L1, and the thermally conductive member 40 has a size of L2, where 0.5≤L2/L1≤1.5.

In the embodiments, setting the range of L2/L1 within the interval [0.5, 1.5] can reduce the space occupied by the thermally conductive member 40 in the third direction, thereby further improving the space utilization rate of the battery 10.

It should be understood that when L2/L1 is less than 0.5, the size of the thermally conductive member 40 is too small to effectively exchange heat with the battery cell 21; when L2/L1 is greater than 1.5, the size of the thermally conductive member 40 is too large and may occupy space within the battery 10, which is not conducive to improving the space utilization rate of the battery 10.

It should be noted that in the embodiments, the value of L2/L1 may be 0.5, 0.6, 0.7, 0.8, 0.9, 1.0, 1.1, 1.2, 1.3, 1.4, ..., or 1.5.

In some embodiments of this application, along the third direction, the overlapping region has a size of L3, where 0.5≤L3/L1≤1.

In the embodiments, the size of the overlapping region in the third direction is set, so that the heat exchange area between the thermally conductive member 40 and the main body 2131 can be reasonably set, greatly enhancing the heat exchange effect of the thermally conductive member 40 for the main body 2131.

It should be understood that when L3/L1 is less than 0.5, the overlapping area between the thermally conductive member 40 and the main body 2131 is too small. This makes the heat exchange effect of the thermally conductive member 40 for the battery cell 21 poor, unable to effectively guarantee the heat dissipation of the battery cell 21.

It should be noted that in the embodiments, the value of L3/L1 may be 0.5, 0.6, 0.7, 0.8, 0.9, ..., or 1.

In some embodiments of this application, the thermally conductive member 40 is provided with a channel for accommodating a heat exchange medium.

Specifically, the thermally conductive member 40 is connected to a medium circulation device, and the channel is filled with a heat exchange medium (such as water or oil), where the heat exchange medium can circulate within the channel. The battery cell 21 conducts heat transfer with the heat exchange medium in the channel through the thermally conductive member 40, and the heat exchange medium flows within the channel, and carries away the heat exchanged with the battery cell 21. This is a high-efficiency heat exchange method with a simple structure.

In some embodiments of this application, the battery 10 further includes a current collecting member 50, where the current collecting member 50 is fluidly connected to the thermally conductive member 40. The thermally conductive member 40 is provided with the current collecting member 50 at one end in the first direction, or the thermally conductive member 40 is provided with the current collecting member 50 at both ends in the first direction.

Specifically, as shown in FIG.s 27 and 28, the current collecting member 50 is provided at one end or both ends of the thermally conductive member 40 in the first direction. Providing the current collecting member 50 makes it possible to collect the heat exchange medium within the thermally conductive member 40, reducing the number of components, and thereby improving the space utilization rate within the box 30.

Additionally, when the battery 10 is subjected to compression or impact in the second direction, the placement of the current collecting member 50 can avoid the compression or impact, reducing the possibility of damage to the current collecting member 50, so that the heat exchange medium can fully dissipate heat from the battery cell 21, further reducing the safety hazards caused by high temperatures in the battery 10.

In some embodiments of this application, the current collecting member 50 is provided in a quantity of two, where the two current collecting members 50 are provided at one end of the thermally conductive member 40 in the first direction, and the two current collecting members 50 are arranged along the third direction. The third direction is a height direction of the battery cell 21, and the first direction, the second direction, and the third direction intersect with each other.

Specifically, providing the two current collecting members 50 can improve the collection performance of the heat exchange medium, allowing the heat exchange medium to have a good flow rate, further enhancing the heat exchange capability of the heat exchange medium for the battery cell 21.

Additionally, with the two current collecting members 50 both provided at one end in the first direction and arranged along the third direction, the space occupied by the current collecting members 50 along the first direction within the battery 10 can be effectively reduced, thereby facilitating the arrangement of other structures within the battery 10.

In some embodiments of this application, the battery cell 21 further includes a pressure relief mechanism 215, where the pressure relief mechanism 215 is arranged on any surface of the battery cell 21.

Specifically, when the battery cell 21 experiences thermal runaway, the pressure inside the battery cell 21 can be released in a timely manner through the pressure relief mechanism 215, to avoid safety hazards such as explosion of the battery cell 21.

It should be understood that the pressure relief mechanism 215 can be arranged on the first surface 216, the second surface 217, the third surface 218, or another surface of the battery cell 21.

In some embodiments of this application, the pressure relief mechanism 215 is arranged on the first surface 216 or the second surface 217.

Specifically, as shown in FIG.s 6 to 12, the pressure relief mechanism 215 and the electrode terminal 214 are both arranged on the first surface 216. Providing the pressure relief mechanism 215 on the first surface 216 facilitates simultaneous installation of the pressure relief mechanism 215 and the electrode terminal 214, thereby improving the convenience of assembly and increasing the efficiency of production.

Additionally, when the pressure relief mechanism 215 is arranged on the second surface 217, the second surface 217 is connected to the box 30, thereby using the box 30 to protect the outside of the pressure relief mechanism 215, reducing the possibility of impact on the pressure relief mechanism 215.

Furthermore, the placement of the pressure relief mechanism 215 can meet the needs of different types of battery cells 21, further improving the safety performance of the battery 10.

In some embodiments of this application, the battery assembly 20 includes at least two battery cells 21, where the at least two battery cells 21 are arranged along the first direction.

Specifically, the at least two battery cells 21 are arranged along the first direction, facilitating the arrangement of the battery cells 21 within the box 30.

It should be noted that when the at least two battery cells 21 are arranged along the first direction, the large surface (the largest-area surface) of the battery cell 21 can be arranged along the first direction and intersect with the horizontal plane, or can be arranged along the second direction and intersect with the horizontal plane.

In some embodiments of this application, the battery cell 21 includes an electrode assembly 213, where the electrode assembly 213 is a wound structure and flat, with an outer surface of the electrode assembly 213 including two flat surfaces, where the two flat surfaces face each other along the second direction; or the electrode assembly 213 is a stacked structure, with the first electrode plate, separator, and second electrode plate of the electrode assembly 213 stacked along the second direction, where the second direction, the first direction, and the third direction intersect with each other.

The electrode assembly 213 is a component in the battery cell 21 where the electrochemical reaction occurs. Inside the battery cell 21, there can be one or more electrode assemblies 213. The electrode assembly 213 is mainly formed by winding or stacking the electrode plates (positive and negative electrode plates), and usually, a separator is placed between the positive electrode plate (first electrode plate) and the negative electrode plate (second electrode plate). The parts of the electrode plates (first and second electrode plates) that contain the active material constitute the main body 2131 of the electrode assembly 213, and the parts of the first and second electrode plates that do not contain the active material each form a tab 2132. The positive and negative tabs can be located together at one end of the main body or respectively at two ends of the main body 2131.

Specifically, the electrode assembly 213 is a wound structure and is flat, with the outer surface of the electrode assembly 213 including two flat surfaces, where the two flat surfaces face each other along the second direction, or the electrode assembly 213 is provided as a stacked structure. This reduces the space occupied by the electrode assembly 213 in the first direction, facilitating the arrangement and installation of other components in the battery 10 in the first direction.

In some embodiments of this application, along the first direction, the battery cell 21 has a maximum size of L, and along the second direction, the battery cell 21 has a maximum size of D, where the second direction, the first direction, and the third direction intersect with each other, and LID is within a range of 1 to 30.

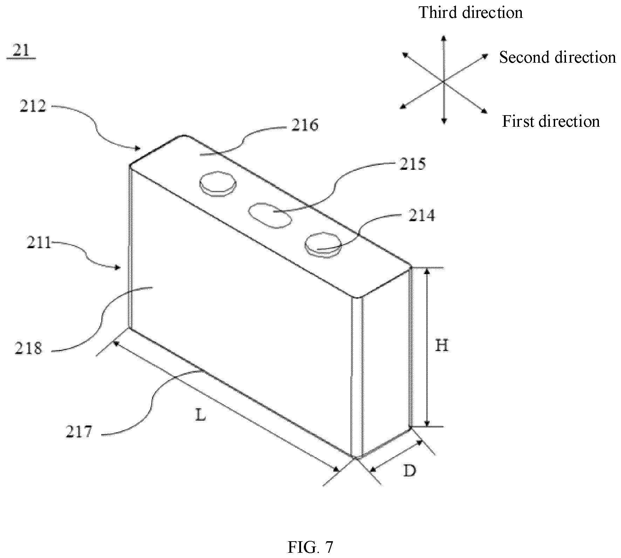

Specifically, as shown in FIG. 7, in FIG. 7, the battery cell 21 has a maximum size of L along the first direction and a maximum size of D along the second direction. Setting the sizes of the battery cell 21 in the first and second directions, the battery capacity of the battery cell 21 can be maximized while ensuring the support strength of the battery cell 21.

It should be noted that the value of LID may be 1, 2, 3, 4, 5, 6, 7, 8, ..., or 30. With LID set to different values, the battery cell 21 can have different shapes, thereby meeting the needs of different models of battery 10.

In some embodiments of this application, along the first direction, the battery cell 21 has a maximum size of L, and along the third direction, the battery cell 21 has a maximum size of H, where L/H is within a range of 0.5 to 6; and the first direction, the second direction, and the third direction intersect with each other.

Specifically, as shown in FIG. 7, in FIG. 7, the battery cell 21 has a maximum size of L along the first direction and a maximum size of H along the third direction. The battery cell 21 is set according to the above size ratio, which can maximize the battery capacity of the battery cell 21.

It should be noted that the value of L/H may be 0.5, 1, 1.5, 2, 2.5, 3, 3.5, 4, ..., or 6. With L/H set to different values, the battery cell 21 can have different shapes, thereby meeting the needs of different models of battery 10.

In some embodiments of this application, the box 30 includes a first portion 31 and a second portion 32, the first portion 31 and the second portion 32 being detachably connected, and the second surface 217 is provided in a quantity of at least one, where at least one of the second surfaces 217 is bonded to the first portion 31 or the second portion 32.

Specifically, as shown in FIG. 5, the second surface 217 is bonded and fixed to the first portion 31 or the second portion 32 of the box 30, thereby improving the convenience of the assembly process.

Additionally, the bonding fixation has a high connection strength, effectively ensuring the stability of the battery cell 21 within the box 30.

In some embodiments of this application, the second surface 217 of the battery cell 21 can also be connected and fixed to the first portion 31 or the second portion 32 of the box 30 through a snap-fit method. For example, a slot can be set at a position corresponding to the battery cell 21 in the first portion 31 or the second portion 32, and the battery cell 21 can be connected and fixed to the first portion 31 or the second portion 32 by snapping into the slot.

In some embodiments of this application, the second surface 217 is provided in a quantity of two, where the two second surfaces 217 are arranged oppositely, the first portion 31 is bonded to one of the second surfaces 217, and the second portion 32 is bonded to the other of the second surfaces 217.

Specifically, two second surface 217 are provided, and the two second surfaces 217 are arranged oppositely in the third direction. With the two second surfaces 217 provided and the two second surfaces 217 bounded to the first portion 31 and the second portion 32 of the box 30, respectively, the connection strength between the battery cell 21 and the box 30 is further improved, and the stability of the battery cell 21 within the box 30 is further enhanced.

In some embodiments of this application, as shown in FIG. 30, the second surface 217 is fixedly connected to the first portion 31 and/or the second portion 32 through a first bonding layer 60, and the battery 10 further includes a thermally conductive member 40. The thermally conductive member 40 is thermally connected to the largest-area surface of the battery cell 21 through a second bonding layer 70, and the thermal conductivity of the first bonding layer 60 is less than or equal to the thermal conductivity of the second bonding layer 70.

Specifically, since the first bonding layer 60 is used to connect the second surface 217 and the box 30, while the second bonding layer 70 is used for thermally connecting the largest-area surface of the battery cell 21 and the thermally conductive member 40, the thermal conductivity of the first bonding layer 60 is set to be less than or equal to the thermal conductivity of the second bonding layer 70 to ensure more effective heat dissipation of the battery cell 21 through the thermally conductive member 40.

In some embodiments of this application, a ratio of the thermal conductivity of the first bonding layer 60 to the thermal conductivity of the second bonding layer 70 ranges from 0.1 to 1.

Specifically, setting the above ratio range can effectively dissipate heat from the battery cell 21 through the thermally conductive member 40.

It should be noted that the ratio of the thermal conductivity of the first bonding layer to the thermal conductivity of the second bonding layer may be 0.1, 0.2, 0.3, 0.4, 0.5, 0.6, 0.7, 0.8, 0.9, ..., or 1.

Additionally, in the embodiments, the first bonding layer 60 and the second bonding layer 70 can be a same type of glue, but with different thermal conductivities, that is, the thermal conductivity of the first bonding layer 60 is less than the thermal conductivity of the second bonding layer 70. For example, the first bonding layer 60 and the second bonding layer 70 can be made of thermally conductive polyurethane adhesive layers, with different amounts of thermally conductive particles added to achieve different thermal conductivities.

Additionally, the first bonding layer 60 and the second bonding layer 70 can be two different types of glue, for example, the first bonding layer 60 can be structural glue, foam filling glue, pressure-sensitive glue, potting glue, and the like, and the second bonding layer 70 can be thermal glue and the like.

In some embodiments of this application, the battery 10 further includes a baffle 321, and the baffle 321 is arranged along the third direction opposite to the first surface 216 of the battery cell 21 provided with the electrode terminal 214, and the electrode terminal 214 is spaced from the baffle 321 by 1.2 mm to 25 mm.

Specifically, the baffle 321 is provided within the box 30 and corresponds to an electrode terminal of the battery cell 21. Spacing the baffle 321 from the electrode terminal 214 to be 1.2 mm to 25 mm can prevent the baffle 321 from colliding with the electrode terminal 214 when the battery 10 is impacted along the second direction, thereby avoiding damage to the electrode terminal 214.

It should be noted that the baffle 321 may be spaced from the electrode terminal 214 by 1.2 mm, 3 mm, 4.5 mm, 6 mm, 8.5 mm, 1 mm, ..., 25 mm.

A second aspect of this application proposes an electric device including the above battery 10, where the battery 10 is used to provide electrical energy to drive the electric device to travel.

In some embodiments of this application, when the lengthwise direction of the battery 10 is different from the traveling direction of the electric device, the first direction is the traveling direction of the electric device.

Specifically, as shown in FIG.s 1 to 9, the first direction is set as the traveling direction of the electric device, the third direction intersects with both the first direction and the horizontal direction, the battery cell 21 located inside the box 30 of the battery 10 has the first surface 216 and the second surface 217, the first surface 216 is provided with an electrode terminal 214, and the second surface 217 is connected to the box 30. The setting of the first direction facilitates the installation and arrangement of the battery 10 on the electric device, and the usage requirements of different electric devices can be met by adjusting the arrangement of the battery cell 21 inside the box 30.

The above description is only an overview of the technical solutions of this application. To better understand the technical means of this application, the technical solutions can be implemented according to the content of the specification, and to make the above and other objectives, features, and advantages of this application clearer and more understandable, specific embodiments of this application are described below.

In the embodiments of this application, as shown in FIG.s 1 to 33, this application proposes a battery 10. The battery 10 includes a box 30 and a battery assembly 20 located within the box 30. The electrode assembly 213 is provided in a quantity of at least one, each electrode assembly 213 containing at least one battery cell 21. The battery cell 21 includes a first surface 216 and a second surface 217, the first surface 216 is provided with an electrode terminal 214, and the second surface 217 is connected to the box 30. The battery assembly 20 is arranged along the first direction (the first direction is the lengthwise direction of the battery 10 or the traveling direction of an electric device having the battery 10), the second surface 217 intersects with the third direction (a height direction of the battery 10). The first surface 216 can be arranged along the first direction and intersect with the horizontal plane, or arranged along the second direction (the width direction of the battery 10) and intersect with the horizontal plane, or is opposite to the second surface 217 in the third direction, with the first direction, the second direction, and the third direction intersecting with each other.

When the battery 10 is used for an electric device, taking a vehicle as an example of the electric device, the vehicle can travel under the driving of the battery 10, with the battery assembly 20 constituting the battery 10 arranged along the first direction, where the first direction can be a traveling direction of the vehicle, that is, the battery assembly 20 is arranged along the traveling direction of the vehicle 1. Additionally, in this application, the battery 10 has a rectangular structure, with the rectangular battery 10 having a lengthwise direction, a width direction, and a height direction, and the battery assembly 20 located within the box 30 is arranged along the first direction, where the first direction can alternatively be the lengthwise direction of the battery 10.

Specifically, the battery cell 21 has the first surface 216 and the second surface 217, with the second surface 217 intersecting with the third direction (the third direction intersects with both the first direction and the horizontal direction), where the first surface 216 is provided with an electrode terminal 214, and the second surface 217 is connected to the box 30. This ensures that the surface of the battery cell 21 connected to the box 30 does not have electrode terminals 214, allowing for full exposure of the electrode terminals 214 after the box 30 is opened, facilitating maintenance and inspection of the battery 10 without separating the battery cell 21 from the box 30 after the box 30 is opened, improving the convenience for maintenance and inspection of the battery 10.

Further, when the first surface 216 and the second surface 217 are provided correspondingly, both can be the largest-area surface, or neither can be the largest-area surface. When the first surface 216 and the second surface 217 intersect, any one of the first surface 216 and the second surface 217 can be the largest-area surface. When neither the first surface 216 nor the second surface 217 is the largest-area surface, the battery cell 21 further has the largest-area third surface 218. When the first surface 216 is opposite to the second surface 217 in the third direction, the third surface 218 can be provided between the first surface 216 and the second surface 217. When the first surface 216, the second surface 217, and the third surface 218 intersect with each other, the first surface 216 and the third surface 218 form an outer circumferential surface of the battery cell 21.

The box 30 includes a first portion 31 and a second portion 32. The second portion 32 can be a hollow structure open at one end, the first portion 31 can be a plate-like structure, and the first portion 31 covers the open side of the second portion 32. This makes the first portion 31 and the second portion 32 together define a space for accommodating the battery cell 21. The second surface 217 can be bonded to the first portion 31 or the second portion 32 through a first bonding layer 60.

Along the first direction, the battery cell 21 has a maximum size of L, and along the second direction, the battery cell 21 has a maximum size of D, where LID is within a range of 1 to 30. Along the third direction, the battery cell 21 has a maximum size of H, with L/H being within a range of 0.5 to 6.

Further, the battery cell 21 is provided with the pressure relief mechanism 215. The pressure relief mechanism 215 can be arranged on any one of the first surface 216, the second surface 217, and the third surface 218. In the FIG.s attached to this specification, the pressure relief mechanism 215 and the electrode terminal 214 are both arranged on the first surface 216.

Further, the battery 10 further includes the thermally conductive member 40. The thermally conductive member 40 is provided within the box 30 of the battery 10, and the thermally conductive member 40 is arranged along the first direction and thermally connected to the battery cell 21. The surface of the battery cell 21 that is thermally connected to the thermally conductive member 40 can be the largest-area surface of the battery cell 21. The thermally conductive member 40 has a channel for accommodating a heat exchange medium, with the heat exchange medium flowing in the channel and conducting heat transfer between the thermally conductive member 40 and the battery cell 21.

The thermally conductive member 40 is bonded and fixed to the battery cell 21 through a second bonding layer 70, with the ratio of the thermal conductivity of the first bonding layer 60 to the thermal conductivity of the second bonding layer 70 ranging from 0.1 to 1.

Further, along the second direction, the thermally conductive member 40 and the main body 2131 at least partially overlap in projection and have an overlapping region.

Further, along the third direction, the main body 2131 has a size of L1, and the thermally conductive member 40 has a size of L2, where 0.5≤L2/L1≤1.5.

Further, along the third direction, the overlapping region has a size of L3, where 0.5≤L3/L1≤1.

Further, the battery 10 further includes a current collecting member 50. The current collecting member 50 is provided at an end of the thermally conductive member 40 in the first direction and is connected to the heat exchange medium channel of the thermally conductive member 40.

Further, the box 30 also has a baffle 321. The baffle 321 is provided corresponding to the electrode terminal 214 of the battery cell 21, and the electrode terminal 214 is spaced from the baffle 321 by 1.2 mm to 25 mm.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A battery, **characterized in that**:
the battery comprises:
a box (30); and
a battery assembly (20) accommodated within the box (30),
wherein the battery assembly (20) comprises at least one battery cell (21), the battery assembly (20) is arranged along a first direction, the first direction is a lengthwise direction of the battery or a traveling direction of an electric device provided with the battery, the battery cell (21) has a first surface (216) and a second surface (217), the first surface (216) is provided with an electrode terminal (214), the second surface (217) is connected to the box (30), the second surface (217) intersects with a third direction, and the third direction intersects with both the first direction and the horizontal plane.

2. The battery according to claim 1, wherein the lengthwise direction of the battery is parallel to or intersects with the traveling direction of the electric device.

3. The battery according to claim 1 or 2, wherein along the third direction, the first surface (216) and the second surface (217) are arranged oppositely, the battery cell (21) further has a third surface (218), the third surface (218) is a largest-area surface of the battery cell (21), the third surface (218) is arranged along the third direction and intersects with the horizontal plane, and the third surface (218) is connected to both the first surface (216) and the second surface (217).

4. The battery according to claim 3, wherein the third surface (218) is provided in a quantity of two, the two third surfaces (218) are arranged oppositely along the first direction; and
the battery cell (21) comprises two oppositely polarized electrode terminals (214), and the two oppositely polarized electrode terminals (214) are both arranged on the first surface (216).

5. The battery according to claim 3, wherein the third surface (218) is provided in a quantity of two, the two third surfaces (218) are arranged oppositely along a second direction, and the second direction, the first direction, and the third direction intersect with each other; and
the battery cell (21) comprises two oppositely polarized electrode terminals (214), and the two oppositely polarized electrode terminals (214) are both arranged on the first surface (216).

6. The battery according to claim 3, wherein the third surface (218) is provided in a quantity of one, the battery cell (21) comprises two oppositely polarized electrode terminals (214), one of the two oppositely polarized electrode terminals (214) is arranged on the first surface (216), and the housing (211) of the battery cell (21) forms the other of the two oppositely polarized electrode terminals (214).

7. The battery according to claim 1 or 2, wherein the battery cell (21) further has a third surface (218), the third surface (218) is a largest-area surface of the battery cell (21), the third surface (218) is arranged along the third direction and intersects with the horizontal plane, and the first surface (216), the second surface (217), and the third surface (218) intersect with each other.

8. The battery according to claim 7, wherein the first surface (216) is provided in a quantity of two, the two first surfaces (216) are arranged oppositely along the first direction, and the battery cell (21) comprises two oppositely polarized electrode terminals (214); and
wherein the two oppositely polarized electrode terminals (214) are both arranged on one of the first surfaces (216), or the two oppositely polarized electrode terminals (214) are respectively arranged on the two first surfaces (216).

9. The battery according to claim 7, wherein the first surface (216) is provided in a quantity of two, the two first surfaces (216) are arranged oppositely along a second direction, the first direction, the second direction, and the third direction intersect with each other, and the battery cell (21) comprises two oppositely polarized electrode terminals (214); and
wherein the two oppositely polarized electrode terminals (214) are both arranged on one of the first surfaces (216), or the two oppositely polarized electrode terminals (214) are respectively arranged on the two first surfaces (216).

10. The battery according to claim 1 or 2, wherein the second surface (217) is a largest-area surface of the battery cell (21), the first surface (216) has a smaller area than the second surface (217), and the first surface (216) is arranged along the first direction and intersects with the second surface (217);
the battery cell (21) comprises two first surfaces (216), the two first surfaces (216) are arranged oppositely along a second direction, and the first direction, the second direction, and the third direction intersect with each other; and
the battery cell (21) comprises two oppositely polarized electrode terminals (214), the two oppositely polarized electrode terminals (214) are both arranged on a same one of the first surfaces (216), or the two oppositely polarized electrode terminals (214) are respectively arranged on the two first surfaces (216).

11. The battery according to claim 1 or 2, wherein the second surface (217) is a largest-area surface of the battery cell (21), the first surface (216) has a smaller area than the second surface (217), the first surface (216) is arranged along a second direction and intersects with the second surface (217), and the second direction, the first direction, and the third direction intersect with each other;
the battery cell (21) comprises two first surfaces (216), and the two first surfaces (216) are arranged oppositely along the first direction; and
the battery cell (21) comprises two oppositely polarized electrode terminals (214), the two oppositely polarized electrode terminals (214) are both arranged on a same one of the first surfaces (216), or the two oppositely polarized electrode terminals (214) are respectively arranged on the two first surfaces (216).

12. The battery according to claim 1 or 2, wherein the first surface (216) is a largest-area surface of the battery cell (21).

13. The battery according to claim 12, wherein the battery cell (21) comprises the first surface (216) and a fourth surface opposite to the first surface (216), the first surface (216) and the fourth surface are arranged oppositely along the first direction, the fourth surface is provided with a recess on edge, the first surface (216) is used for arranging the electrode terminal (214), and the electrode terminal (214) protrudes in a second direction from the first surface (216) and corresponds to the recess.

14. The battery according to claim 12, wherein the battery cell (21) comprises the first surface (216) and a fourth surface opposite to the first surface (216), the first surface (216) and the fourth surface are arranged oppositely along a second direction, the second direction, the first direction, and the third direction intersect with each other, the fourth surface is provided with a recess on edge, the first surface (216) is used for arranging the electrode terminal (214), and the electrode terminal (214) protrudes in the second direction from the first surface (216) and corresponds to the recess.

15. The battery according to any one of claims 1 to 14, wherein the battery further comprises a thermally conductive member (40), the thermally conductive member (40) is arranged along the first direction, and the thermally conductive member (40) is at least thermally connected to a largest-area surface of the battery cell (21).

16. The battery according to claim 15, wherein the battery comprises at least two battery assemblies (20), along the second direction, two sides of the thermally conductive member (40) are thermally connected to the two battery assemblies (20) respectively, and the second direction, the first direction, and the third direction intersect with each other.

17. The battery according to claim 15, wherein the battery comprises multiple thermally conductive members (40), the multiple thermally conductive members (40) are arranged along the second direction, and the second direction, the first direction, and the third direction intersect with each other.

18. The battery according to claim 17, wherein along the second direction, the thermally conductive members (40) are arranged on two sides of the battery assembly (20) respectively, and the battery assembly (20) is thermally connected to the thermally conductive members (40) on the two sides.

19. The battery according to claim 18, wherein along the second direction, the battery cell (21) comprises two opposite third surfaces (218), the third surfaces (218) are largest-area surfaces of the battery cell (21), and the two third surfaces (218) of the battery cell (21) are each thermally connected to one of the thermally conductive members (40).

20. The battery according to any one of claims 1 to 19, wherein the battery cell (21) comprises an electrode assembly (213), the electrode assembly (213) comprises a main body (2131) and a tab (2132) protruding from the main body (2131), the tab (2132) being electrically connected to the electrode terminal (214); and
along the second direction, the thermally conductive member (40) and the main body (2131) at least partially overlap on projection and have an overlapping region, and the second direction, the first direction, and the third direction intersect with each other.

21. The battery according to claim 20, wherein along the third direction, the main body (2131) has a size of L1, and the thermally conductive member (40) has a size of L2, wherein 0.5≤L2/L1≤1.5.

22. The battery according to claim 20, wherein along the third direction, the overlapping region has a size of L3, wherein 0.5≤L3/L1≤1.

23. The battery according to any one of claims 15 to 22, wherein the thermally conductive member (40) is provided with a channel for accommodating a heat exchange medium.

24. The battery according to claim 23, wherein the battery further comprises a current collecting member (50), and the current collecting member (50) is fluidly connected to the thermally conductive member (40); and
wherein the thermally conductive member (40) is provided with the current collecting member (50) at one end in the first direction, or the thermally conductive member (40) is provided with the current collecting member (50) at both ends in the first direction.

25. The battery according to claim 24, wherein the current collecting member (50) is provided in a quantity of two, the two current collecting members (50) are provided at one end of the thermally conductive member (40) in the first direction, and the two current collecting members (50) are arranged along the third direction.

26. The battery according to any one of claims 1 to 25, wherein the battery cell (21) further comprises a pressure relief mechanism (215), wherein the pressure relief mechanism (215) is arranged on any surface of the battery cell (21).

27. The battery according to claim 26, wherein the pressure relief mechanism (215) is arranged on the first surface (216) or the second surface (217).

28. The battery according to any one of claims 1 to 27, wherein the battery assembly (20) comprises at least two battery cells (21), and the at least two battery cells (21) are arranged along the first direction.

29. The battery according to any one of claims 1 to 28, wherein the battery cell (21) comprises an electrode assembly (213), wherein:
the electrode assembly (213) is a wound structure and flat, with an outer surface of the electrode assembly (213) comprising two flat surfaces, and the two flat surfaces face each other along the second direction; or
the electrode assembly (213) is a stacked structure, with a first electrode plate, a separator, and a second electrode plate of the electrode assembly (213) stacked along the second direction, and
wherein the second direction, the first direction, and the third direction intersect with each other.

30. The battery according to any one of claims 1 to 29, wherein along the first direction, the battery cell (21) has a maximum size of L, along the second direction, the battery cell (21) has a maximum size of D, and the second direction, the first direction, and the third direction intersect with each other, and LID is within a range of 1 to 30.

31. The battery according to any one of claims 1 to 29, wherein along the first direction, the battery cell (21) has a maximum size of L, along the third direction, the battery cell (21) has a maximum size of H, and L/H is within a range of 0.5 to 6.

32. The battery according to any one of claims 1 to 31, wherein the box (30) comprises a first portion (31) and a second portion (32), the first portion (31) and the second portion (32) are detachably connected, the second surface (217) is provided in a quantity of at least one, and at least one of the second surfaces (217) is bonded to the first portion (31) or the second portion (32).

33. The battery according to claim 32, wherein the second surface (217) is provided in a quantity of two, the two second surfaces (217) are arranged oppositely, the first portion (31) is bonded to one of the second surfaces (217), and the second portion (32) is bonded to the other of the second surfaces (217).

34. The battery according to claim 32 or 33, wherein the second surface (217) is fixedly connected to the first portion (31) and/or the second portion (32) through a first bonding layer (60), and the battery further comprises a thermally conductive member (40), the thermally conductive member is thermally connected to a largest-area surface of the battery cell (21) through a second bonding layer (70), and a thermal conductivity of the first bonding layer (60) is less than or equal to a thermal conductivity of the second bonding layer (70).

35. The battery according to claim 34, wherein a ratio of the thermal conductivity of the first bonding layer (60) to the thermal conductivity of the second bonding layer (70) ranges from 0.1 to 1.

36. The battery according to any one of claims 1 to 35, wherein the battery further comprises a baffle, the baffle is arranged along the third direction opposite to the first surface (216) of the battery cell (21) provided with the electrode terminal (214), and the electrode terminal (214) is spaced from the baffle by 1.2 mm to 25 mm.

37. An electric device, comprising the battery according to any one of claims 1 to 36, wherein the battery is configured to provide electrical energy to drive the electric device to travel.

38. The electric device according to claim 37, wherein when the lengthwise direction of the battery is different from the traveling direction of the electric device, the first direction is the traveling direction of the electric device.
